# EUROPÄISCHE PATENTANMELDUNG

(11) **EP 4 715 340 A1**
(43) Veröffentlichungstag der Anmeldung: **25.03.2026**
(21) Anmeldenummer: 25201885.8
(22) Anmeldetag: 12.09.2025
(51) Int. Cl.: G01F 1/66, G01F 1/667

(54) **ULTRASCHALLDURCHFLUSSMESSGERÄT**

(30) Priorität: 20.09.2024 DE 102024127305
(71) Anmelder: Krohne Messtechnik GmbH, 47058 Duisburg (DE)
(72) Erfinder: Vogt, Michael, 44797 Bochum (DE); Massaad, Jack, 3328 AJ Dordrecht (NL); Huijzer, Arie, 3363 BS Sliedrecht (NL); van Klooster, Jeroen Martin, 4005 GN Tiel (NL)
(74) Vertreter: Gesthuysen Patentanwälte

(57) **Zusammenfassung**

Beschrieben und dargestellt ist ein Ultraschalldurchflussmessgerät (1) mit einem Messrohr (2), mit einem ersten Ultraschallwandler (3), mit einem zweiten Ultraschallwandler (4) und mit einer Steuer- und Auswerteeinheit (5), wobei der erste Ultraschallwandler (3) und der zweite Ultraschallwandler (4) axial versetzt am Messrohr (2) angeordnet sind, wobei der erste Ultraschallwandler (3) zumindest als Ultraschallaktor (6) ausgebildet ist, wobei der zweite Ultraschallwandler (4) zumindest als Ultraschallsensor (7) ausgebildet ist, wobei die Steuer- und Auswerteeinheit (5) im Betriebszustand des Ultraschalldurchflussmessgeräts (1) den Ultraschallaktor (6) so ansteuert, dass in dem von einem Fluid (8) durchströmten Messrohr (2) eine geführte Ultraschallwelle (9) angeregt wird und sich die geführte Ultraschallwelle (9) in einem kombinierten Wellenleiter umfassend Messrohr (2) und Fluid (8) in axialer Erstreckungsrichtung des Messrohrs (2) in Messrohr (2) und Fluid (8) geführt ausbreitet, wobei der Ultraschallsensor (7) die geführte Ultraschallwelle (9) empfängt und die Steuer- und Auswerteeinheit (5) durch Auswertung der empfangenen geführten Ultraschallwelle (9) eine Strömungsgeschwindigkeit (v) des Fluids (8) ermittelt.

Eine vorteilhafte Anregung von geführten Ultraschallwellen wird dadurch erzielt, dass zumindest der als Ultraschallaktor (6) ausgestaltete Ultraschallwandler (3) in axialer Erstreckungsrichtung des Messrohrs (2) mehrere Anregungsstrukturen (10) aufweist, wobei die Anregungsstrukturen (10) in axialer Erstreckungsrichtung des Messrohres (2) voneinander beabstandet sind, wobei mittels der Anregungsstrukturen (10) Ultraschallwellen in das von dem Fluid durchströmte Messrohr (2) eingespeist werden, sodass räumlich verteilt in axialer Erstreckungsrichtung des Messrohres (2) ein Wellenmuster wenigstens einer vorbestimmten Wellenmode (m_det) der geführten Ultraschallwelle (9) in dem von dem Fluid (8) durchströmten Messrohr (2) angeregt wird.

## Beschreibung

Die Erfindung betrifft ein Ultraschalldurchflussmessgerät mit einem Messrohr, mit einem ersten Ultraschallwandler, mit einem zweiten Ultraschallwandler und mit einer Steuer- und Auswerteeinheit, wobei der erste Ultraschallwandler und der zweite Ultraschallwandler axial versetzt am Messrohr angeordnet sind, wobei der erste Ultraschallwandler zumindest als Ultraschallaktor ausgebildet ist, wobei der zweite Ultraschallwandler zumindest als Ultraschallsensor ausgebildet ist, wobei die Steuer- und Auswerteeinheit im Betriebszustand des Ultraschalldurchflussmessgeräts den Ultraschallaktor so ansteuert, dass in dem von einem Fluid durchströmten Messrohr eine geführte Ultraschallwelle angeregt wird und sich die geführte Ultraschallwelle in einem kombinierten Wellenleiter umfassend Messrohr und Fluid in axialer Erstreckungsrichtung des Messrohrs in Messrohr und Fluid geführt ausbreitet, wobei der Ultraschallsensor die geführte Ultraschallwelle empfängt und die Steuer- und Auswerteeinheit durch Auswertung der empfangenen geführten Ultraschallwelle eine Strömungsgeschwindigkeit des Fluids ermittelt. Darüber hinaus betrifft die Erfindung auch ein Verfahren zum Bestimmen wenigstens einer Wellenmode, die bei der Durchflussmessung in dem zuvor beschriebenen Ultraschalldurchflussmessgerät erzeugt wird.

Die Durchflussmessung unter Verwendung von Ultraschallwellen ist seit Jahrzehnten bekannt. Unabhängig davon, welches Messverfahren genau zur Anwendung kommt (zum Beispiel Laufzeitmessung, Laufzeitdifferenzmessung (mit der Strömungsrichtung und entgegen der Strömungsrichtung), Frequenzmessung/Dopplereffekt), beruht die Durchflussmessung doch immer auf der Mitnahme von Ultraschallwellen in dem durch das Messrohr strömenden Fluid, dessen Strömungsgeschwindigkeit erfasst werden soll.

Bei der weit überwiegenden Anzahl von Ultraschalldurchflussmessgeräten sind die charakteristischen Querschnittsabmessungen des Messrohrs (bei einem runden Messrohr der Durchmesser) deutlich größer als die Wellenlänge der von dem Ultraschallaktor erzeugten Ultraschallwellen. Häufig werden Maßnahmen zur Strahlbündelung (beam forming) umgesetzt. Im Ergebnis können in diesen Fällen jedenfalls die sich im Fluid innerhalb des Messrohrs ausbreitenden Ultraschallwellen als freie Wellen betrachtet und beschrieben werden, bei deren Ausbreitung das Messrohr, abgesehen von Reflexionen an der Messrohrwandung, keine maßgebliche Rolle spielt.

Dies ändert sich bei Ultraschalldurchflussmessgeräten mit Messrohren, deren charakteristische Querschnittsabmessungen im Bereich der Wellenlänge der eingesetzten Ultraschallwellen liegen. In diesem Fall ist die Messrohrwand eine stets zu berücksichtigende geometrische Randbedingung für die Bewegung und Ausbreitung der Ultraschallwellen, die Ultraschallwellen breiten sich dann als geführte Schallwellen in dem kombinierten bzw. hybriden Wellenleiter aus, der das Messrohr und das Fluid umfasst, die geführten Ultraschallwellen bewegen sich also sowohl geführt durch das Messrohr als auch geführt durch das Fluid. Im Rahmen dieser Erfindung sind Ultraschalldurchflussmessgeräte gemeint, die nach diesem Prinzip arbeiten.

Zu Klarstellung wird darauf hingewiesen, dass das vorstehend erläuterte Funktionsprinzip, auf dem die vorliegende Erfindung basiert, sich von solchen Ultraschalldurchflussmessgeräten mit geführten Wellen unterscheidet, bei denen eine geführte Ausbreitung der Ultraschallwellen nur in dem Messrohr erfolgt. Ultraschallwellen treten - je nach Art der angeregten und im Messrohr geführten Ultraschallwelle - in unterschiedlichem Ausmaß von dem Messrohr in das Fluid über, sie bewegen sich in dem Fluid aber als ungeführte Ultraschallwelle fort, also als Freiraumwelle. Derartige Durchflussmessgeräte werden auch als Leaky-Lamb-Wave-Durchflussmessgeräte bezeichnet, die mit geführten Lamb-Wellen in der Messrohrwand arbeiten und mit dadurch verursachten Freiraum-Ultraschallwellen im Medium. Nach diesem Prinzip arbeitende Ultraschalldurchflussmessgeräte sind im Rahmen dieser Erfindung nicht gemeint.

In Abhängigkeit von den geometrischen und physikalischen Randbedingungen des Messrohrs, von Fluidparametern und von der Frequenz der angeregten Ultraschallwellen sind verschiedene Schwingungsmoden auf dem Wellenleiter umfassend Messrohr und Fluid ausbreitungsfähig, wobei die Wellenmoden unterschiedliche räumliche und zeitliche Ausbreitungseigenschaften aufweisen. Wellenmoden können mehr oder weniger vorteilhaft gewählt werden.

Der Erfindung liegt die Aufgabe zugrunde, ein Ultraschalldurchflussmessgerät der zuvor genannten Art anzugeben, mit dem auf vorteilhafte Weise geführte Ultraschallwellen angeregt und/oder empfangen werden können, genauso wie ein Verfahren anzugeben, mit dem vorteilhafte Schwingungsmoden, in denen die geführten Ultraschallwellen angeregt werden, bestimmt werden können.

Die Aufgabe wird bei dem eingangs beschriebenen Ultraschalldurchflussmessgerät zunächst dadurch gelöst, dass zumindest der als Ultraschallaktor ausgestaltete Ultraschallwandler in axialer Erstreckungsrichtung des Messrohrs mehrere Anregungsstrukturen aufweist, wobei die Anregungsstrukturen in axialer Erstreckungsrichtung des Messrohres voneinander beabstandet sind. Mittels der Anregungsstrukturen werden Ultraschallwellen in das von dem Fluid durchströmte Messrohr eingespeist, sodass räumlich verteilt in axialer Erstreckungsrichtung des Messrohres ein Wellenmuster wenigstens einer vorbestimmten Wellenmode der geführten Ultraschallwelle in dem von dem Fluid durchströmten Messrohr angeregt wird.

Aus dem Umstand, dass mittels der Anregungsstrukturen Ultraschallwellen in das das Messrohr durchströmende Fluid eingespeist werden, ergibt sich, dass die Anregungsstrukturen in irgendeiner Weise Kontaktflächen zum Messrohr und/oder zum im Messrohr geführten Fluid aufweisen, wobei über die Kontaktflächen eine akustische Anregung von Messrohr und/oder Fluid erfolgt, es findet hier also eine Energieübertragung statt. In den durch die Beabstandung bedingten Freiräumen zwischen den Anregungsstrukturen erfolgt keine Anregung von Messrohr und/oder Fluid, jedenfalls keine aktive Anregung, eine geringe parasitäre Anregung mag in manchen Fällen nicht verhinderbar sein, das widerspricht aber nicht der hier vorgestellten Lehre.

Eine sich in einer bestimmten Schwingungsmode über das Medium und das Messrohr entlang des axialen Verlaufs des Messrohrs ausbreitende Schallwelle zeigt eine räumliche (Messrohrerstreckung) und zeitliche Abhängigkeit. Wird ein bestimmter Ort des Messrohrs betrachtet, ist eine zeitliche Amplitudenänderung zu beobachten, wird das gesamte Messrohr zu einem bestimmten Zeitpunkt betrachtet, ist ein räumlicher Verlauf der Amplitude der Schallwelle zu beobachten. Insgesamt hat die Ultraschallwelle bei einer bestimmten Frequenz in einer bestimmten Mode eine charakteristische raum-zeitliche Signatur entlang des Wellenleiters - vom Ultraschallaktor zum Ultraschallsensor - in Form des mit dem Fluid durchströmten Messrohrs.

Der große Vorteil des erfindungsgemäßen Ultraschalldurchflussmessgeräts besteht darin, dass durch mehrere voneinander beabstandete Anregungsstrukturen an mehreren Orten in Erstreckungsrichtung des Messrohrs gesehen - zeitgleich oder zeitlich versetzt - mehrere akustische Anregungen erfolgen können. Diese Anregungen werden so gewählt, dass sie genau der charakteristischen raum-zeitlichen Signatur, also dem Wellenmuster der sich über das von dem Fluid durchströmten Messrohr geführt ausbreitenden Ultraschallwelle der vorbestimmten Wellenmode entsprechen.

Durch die mehreren voneinander beabstandeten Anregungsstrukturen wird ein ausgedehnter, strukturierter Anregungsbelag in Erstreckungsrichtung des Messrohrs realisiert, sodass eine spezifischere Anregung einer gewünschten (oder mehrerer gewünschter) und daher vorbestimmten Wellenmode möglich ist, als dies nur mit einem einzigen Anregungsort (in Erstreckungsrichtung des Messrohrs gesehen) möglich ist. Das Wellenmuster der gewünschten, vorbestimmten Wellenmode kann praktisch räumlich-zeitlich in das durchströmte Messrohr eingeprägt werden. Dadurch wird automatisch eine erhöhte Selektivität bei der Anregung von Wellenmoden erreicht als nur bei einer einzigen Anregungsquelle, ungewünschte Wellenmoden werden so automatisch besser unterdrückt. Es kann sogar beeinflusst werden, mit welcher Intensität sich Wellenmoden links- und rechtsseitig von dem Ort der Anregungsstrukturen ausbreiten, es kann also auch so eine selektive Unterdrückung ungewünschter Wellenmoden in Richtung auf den Ultraschallsensor bewirkt werden und eine selektive Förderung gewünschter, also vorbestimmter Wellenmoden in Richtung auf den Ultraschallsensor.

Eine bevorzugte Ausgestaltung des Ultraschalldurchflussmessgeräts zeichnet sich dadurch aus, dass der als Ultraschallsensor ausgebildete zweite Ultraschallwandler dem Grunde nach ausgebildet ist wie der als Ultraschallaktor ausgebildete erste Ultraschallwandler, also mit mehreren Anregungsstrukturen, sodass die Anregungsstrukturen als Erfassungsstrukturen wirken. Insbesondere ist der zweite Ultraschallwandler identisch ausgebildet wie der als Ultraschallaktor ausgebildete erste Ultraschallwandler.

Durch die Realisierung des Ultraschallsensors mit mehreren als Erfassungsstrukturen wirkenden Anregungsstrukturen besteht grundsätzlich die Möglichkeit, eine bestimmte Wellenmode der geführten Ultraschallwelle selektiv zu erfassen und zu erkennen, ungewünschte Wellenmoden können räumlich-zeitlich ausgefiltert werden, alleine durch die geometrische Anordnung der mehreren Anregungs-/Erfassungsstrukturen aber auch durch zeitliche Fensterung oder durch Summenauswertung in geeigneter Weise verzögerter Empfangssignale der einzelnen Anregungs-/Erfassungsstrukturen.

Bei einer weiteren vorteilhaften Ausgestaltung ist der erste Ultraschallwandler auch als Ultraschallsensor ausgebildet und ist der zweite Ultraschallwandler auch als Ultraschallaktor ausgebildet. Hier bieten sich beispielsweise Realisierungen der Anregungsstrukturen unter Verwendung von Piezoelementen an, die bedarfsweise als Aktor oder Sensor verwendet werden können. Vor dem Hintergrund, dass viele Ultraschalldurchflussmessgeräte eine Laufzeitdifferenzmessung realisieren, also eine Laufzeitmessung mit und entgegen der Strömungsrichtung des Fluids durchführen, ist die gleiche Ausgestaltung des ersten und des zweiten Ultraschallwandlers auch sinnvoll. Vorzugsweise betreibt die Steuer- und Auswerteeinheit den ersten Ultraschallwandler und den zweiten Ultraschallwandler dann derart, dass die Strömungsgeschwindigkeit des Fluids in dem Messrohr über eine Laufzeitdifferenzmessung ermittelt wird.

Bei einer Weiterbildung des Ultraschalldurchflussmessgeräts ist das Messrohr im Bereich der Anregungsstrukturen als akustisches Koppelstück ausgebildet zur Verbesserung der Schallübertragung von der Anregungsstruktur zum Fluid im Messrohr (Impedanzanpassung). Bei einer alternativen Weiterbildung des Ultraschalldurchflussmessgeräts ist das Messrohr im Bereich der Anregungsstruktur durch die Anregungsstruktur selbst gebildet zur direkten Schallübertragung von der Anregungsstruktur ins Fluid im Messrohr.

Es gibt sehr unterschiedliche Möglichkeiten, die zuvor beschriebenen Ultraschalldurchflussmessgeräte mit mehreren Anregungsstrukturen auszugestalten. Nachfolgend werden zwei verschiedene Konzepte der Ausgestaltung beschrieben.

Ein erstes Konzept der Ausgestaltung der erfindungsgemäßen Ultraschalldurchflussmessgeräte zeichnet sich dadurch aus, dass die Anregungsstrukturen durch wenigstens zwei in axialer Erstreckungsrichtung des Messrohrs voneinander beabstandete und das Messrohr in Umfangsrichtung umgreifende Ringe gebildet werden. Eine besonders einfache Anordnung besteht darin, wenn bei mindestens drei Ringen die Ringe äquidistant voneinander beabstandet sind.

Bei einer bevorzugten Weiterbildung des Ultraschalldurchflussmessgeräts sind die Ringe separate Ultraschallerreger, insbesondere wobei die Ultraschallerreger von der Steuer- und Auswerteeinheit separat ansteuerbar sind. Gerade diese Ausgestaltung ermöglicht es, die mehreren voneinander beabstandeten Anregungsstrukturen an mehreren Orten in Erstreckungsrichtung des Messrohrs gesehen zeitlich versetzt ansteuern. Diese Anregungen erfolgen derart, dass sie genau das Wellenmuster der sich über das von dem Fluid durchströmten Messrohr geführt ausbreitenden Ultraschallwelle der vorbestimmten Wellenmode verursachen. Vorteil einer zeitlich variablen und separaten Ansteuerbarkeit der Ultraschallerreger in Form der Ringe ist die Anpassungsmöglichkeit an sich ändernde Randbedingungen, beispielsweise wenn das Fluid sich in seiner Zusammensetzung ändert oder auch eine Temperaturänderung vorliegt.

Bei einer alternativen Ausgestaltung werden die mehreren als Ringe ausgestalteten Anregungsstrukturen von der Steuer- und Auswerteeinheit gleichzeitig angesteuert, was die Ausgestaltung der Steuer- und Auswerteeinheit vereinfacht. In diesem Fall müssen die Abstände zwischen den separaten Ringen so gewählt werden, dass sie genau das Wellenmuster der sich über das von dem Fluid durchströmten Messrohr geführt ausbreitenden Ultraschallwelle der vorbestimmten Wellenmode verursachen.

An den Beispielen ist zu erkennen, dass es bei der Anregung der vorbestimmten Wellenmode in dem vom Fluid durchströmten Messrohr grundsätzlich zwei Freiheitsgrade gibt, um die raum-zeitliche Signatur der gewünschten Wellenmode (bei einer bestimmten Frequenz) anzuregen, nämlich räumlich die Abstände zwischen den Anregungsstrukturen und zeitlich die Anregungszeitpunkte der einzelnen Anregungsstrukturen (sofern separat anregbar).

Besondere Ausgestaltungen des mit als Ringen realisierten Anregungsstrukturen arbeitenden Ultraschalldurchflussmessgeräts zeichnen sich dadurch aus, dass die Ringe von der Steuer- und Auswerteeinheit jeweils über eine innere und äußere Mantelfläche der Ringe kontaktiert werden (radialer Betriebsmodus) oder dass die Ringe von der Steuer- und Auswerteeinheit jeweils über zwei gegenüberliegende Grundflächen kontaktiert und angesteuert werden (axialer Betriebsmodus); dies ist insbesondere sinnvoll, wenn die als Ringe ausgestalteten Anregungsstrukturen Piezoelemente sind oder jedenfalls Piezoelemente aufweisen.

Bei einer weiteren bevorzugten Ausgestaltung des Ultraschalldurchflussmessgeräts sind die Ringe in einer gemeinsamen Ringhalterung gelagert, insbesondere sind sie über ihre äußeren Mantelflächen mit der gemeinsamen Ringhalterung verbunden, wobei die gemeinsame Ringhalterung zumindest teilweise Material aufweist, das das Übersprechen von Ultraschallwellen zwischen den mehreren Ringen dämpft. Der Vorteil dieser Vorgehensweise besteht darin, dass die mehreren Ringe in der Ringhalterung konfiguriert werden können, also beispielsweise haltesicher auf die gewünschten Abstände gebracht werden können, und dann erst auf das Messrohr aufgebracht werden. Dies hat hinsichtlich der Handhabbarkeit Vorteile, insbesondere wenn es sich um sogenannte clamp-on-Konfigurationen handelt.

Bei einer bevorzugten Ausgestaltung der Steuer- und Auswerteeinheit des Ultraschalldurchflussmessgeräts werden die Ringe des Ultraschallaktors in Richtung auf den Ultraschallsensor zeitlich verzögert angesteuert, sodass die Ultraschallwelle in der vorbestimmten Wellenmode in Richtung auf den Ultraschallsensor verstärkt wird. Durch diese Vorgehensweise wird auch eine gewisse Richtungsselektivität erreicht, also die Verstärkung der Ultraschallwelle in Richtung von dem Ultraschallaktor auf den Ultraschallsensor.

Bei einer bevorzugten Ausgestaltung des Ultraschalldurchflussmessgeräts, bei der auch der Ultraschallsensor wie der Ultraschallaktor mit mehreren Anregungsstrukturen ausgebildet ist, wird eine Selektivität der Erfassung des Wellenmusters der vorbestimmten Wellenmode erzielt, indem die von den mehreren Erfassungsstrukturen gelieferten Empfangssignale zeitlich gefenstert oder zeitlich verzögert ausgewertet werden entsprechend der Ausbreitungscharakteristik der vorbestimmten Wellenmode. Bei der zeitlichen Fensterung kann beispielsweise die Ausbreitungsgeschwindigkeit einer gewünschten Wellenmode und der räumliche Abstand von Amplitudenmaxima bei einer bestimmten Frequenz genutzt werden. Wenn in den zeitlichen Auswertungsfenstern keine mit der Ausbreitungscharakteristik der Wellenmode übereinstimmenden Empfangssignale empfangen werden, ist das ein Zeichen für das Nichtvorliegen der gewünschten Wellenmode. Bei der zeitlichen Verzögerung von von verschiedenen Erfassungsstrukturen erfassten Signalen und deren nachgelagerter Addition kann eine Überschreitung eines Signalpegels ein Hinweis auf das Vorliegen einer erfassten vorbestimmten Wellenmode sein und kann das Unterschreiten eines Signalpegels ein Hinweis auf das Ausbleiben einer vorbestimmten Wellenmode sein.

Anhand der Umsetzung des Ultraschalldurchflussmessgeräts mit mehreren ringförmigen Anregungs- und Erfassungsstrukturen lässt sich gut erkennen, dass auch mehrere Schwingungsmoden gleichzeitig angeregt werden können. Bei zwei Ringen liegen zwei Freiheitsgrade hinsichtlich der Auslegung der Anregungsstrukturen vor, nämlich die räumliche Beabstandung der Ringe und ihre zeitlich verzögerte Anregung. Mehrere Anregungsstrukturen bringen automatisch mehr Freiheitsgrade in ihrer Auslegung mit sich, sodass auch eine Mehrzahl von Moden selektiv angeregt und eine Mehrzahl von Moden selektiv erfasst werden kann.

Ein zweites Konzept der Ausgestaltung der erfindungsgemäßen Ultraschalldurchflussmessgeräte zeichnet sich dadurch aus, dass der Ultraschallaktor einen konischen Grundkörper mit einer zentrischen Ausnehmung zur Aufnahme des Messrohrs umfasst, wobei eine durch die Ausnehmung gebildete Innenwandung des Grundkörpers durch wenigstens einen in Umfangsrichtung des Messrohrs verlaufenden Rücksprung in axialer Erstreckungsrichtung des Messrohrs strukturiert ist und die durch den wenigsten einen Rücksprung gebildeten wenigstens zwei Vorsprünge in der Innenwandung des Grundkörpers die Anregungsstrukturen bilden. An der Grundfläche des konischen Grundkörpers ist ein Ultraschallerreger angeordnet, der Ultraschallwellen in den konischen Grundkörper einspeist, wobei die Ultraschallwellen zumindest teilweise an der Mantelfläche des konischen Grundkörpers reflektiert werden und über die Vorsprünge der Innenwandung des Grundkörpers die geführte Ultraschallwelle im vom Fluid durchströmten Messrohr anregen. Bei dieser Ausgestaltung bilden die Vorsprünge in der Wandung des Grundkörpers die Kontaktflächen zum Energieübertrag zum Messrohr/Fluid.

Im Vergleich zum ersten Konzept der Ausgestaltung des Ultraschallaktors weist das zweite Konzept weniger Freiheitsgrade auf, da die Vorsprünge im Grundkörper fest installiert sind. Auch werden Ultraschallwellen nur von einem Ultraschallerreger erzeugt, der die Ultraschallwellen in den konischen Grundkörper einspeist, wobei die Ultraschallwellen sich dort durch Reflexion an der Mantelfläche in dem Grundkörper verteilen und letztlich über die Vorsprünge in der Wandung des Grundkörpers in den Wellenleiter (Messrohr/Fluid) eingespeist werden.

Bei einer bevorzugten Ausgestaltung des zuvor beschriebenen Ultraschalldurchflussmessgeräts ist der Ultraschallerreger als Ring ausgestaltet, insbesondere als ringförmiges Piezoelement, wobei vorzugsweise das ringförmige Piezoelement von der Steuer- und Auswerteeinheit über eine innere und äußere Mantelfläche des Rings kontaktiert wird (radialer Anregungsmode). Alternativ wird das ringförmige Piezoelement von der Steuer- und Auswerteeinheit über zwei gegenüberliegende Grundflächen angesteuert (axialer Anregungsmode).

Unabhängig davon, ob der Ultraschallaktor nach dem ersten Konzept oder dem zweiten Konzept ausgeführt ist, ist es jedenfalls vorteilhaft, wenn der Ultraschallaktor mehrstückig ausgeführt ist, sodass er auf das Messrohr radial aufsteckbar ist, insbesondere wobei die mehreren Stücke über ein oder mehrere Scharniere gegeneinander schwenkbar gelagert sind. Dadurch kann der Ultraschallaktor (und gegebenenfalls natürlich auch der entsprechend ausgeführte Ultraschallsensor) nachträglich auf das Messrohr aufgebracht werden (clamp-on), es ist kein freies Ende einer Rohrleitung erforderlich, um die Ultraschallwandler von dort auf das Messrohr aufzuschieben.

Die eingangs hergeleitete Aufgabe wird ebenfalls gelöst durch ein Verfahren zum Bestimmen wenigstens einer Wellenmode, die bei der Durchflussmessung in einem Ultraschalldurchflussmessgerät erzeugt wird, die also als vorbestimmte Wellenmode beim Betrieb des Ultraschalldurchflussmessgeräts zum Einsatz kommt. Ausgegangen wird wiederum von einem Ultraschalldurchflussmessgerät mit einem Messrohr, einem ersten Ultraschallwandler, einem zweiten Ultraschallwandler und einer Steuer- und Auswerteeinheit. Der erste Ultraschallwandler und der zweite Ultraschallwandler sind axial versetzt am Messrohr angeordnet, wobei der erste Ultraschallwandler zumindest als Ultraschallaktor ausgebildet ist, wobei der zweite Ultraschallwandler zumindest als Ultraschallsensor ausgebildet ist, wobei die Steuer- und Auswerteeinheit im Betriebszustand des Ultraschalldurchflussmessgeräts den Ultraschallaktor so ansteuert, dass in dem von einem Fluid durchströmten Messrohr eine geführte Ultraschallwelle angeregt wird. Der Ultraschallsensor empfängt die geführte Ultraschallwelle. Die Steuer- und Auswerteeinheit ermittelt durch Auswertung der empfangenen geführten Ultraschallwelle eine Strömungsgeschwindigkeit des Fluids. Zumindest der als Ultraschallaktor ausgestaltete Ultraschallwandler weist in axialer Erstreckungsrichtung des Messrohrs mehrere Anregungsstrukturen auf, wobei die Anregungsstrukturen in axialer Erstreckungsrichtung des Messrohres voneinander beabstandet sind. Mittels der Anregungsstrukturen werden Ultraschallwellen in das von dem Fluid durchströmte Messrohr eingespeist, sodass räumlich verteilt, in axialer Erstreckungsrichtung des Messrohres, das Wellenmuster der bestimmten Wellenmode der geführten Ultraschallwelle in dem von dem Fluid durchströmten Messrohr angeregt wird.

Um gezielt auf eine vorteilhafte vorbestimmte Wellenmode schließen zu können, werden für die geometrischen und physikalischen Randbedingungen des von dem Fluid durchströmten Messrohrs für eine Mehrzahl von Wellenmoden die Phasengeschwindigkeiten und die Gruppengeschwindigkeiten von Schallwellen in einem Frequenzbereich bestimmt. Dann wird diejenige Wellenmode als vorbestimmte Wellenmode ausgewählt, die bei einer bestimmten Frequenz innerhalb des Frequenzbereichs bei Auswertung wenigstens eines der nachfolgend genannten Kriterien die höchste Bewertung erhält.

Je weniger sich die Phasengeschwindigkeit und die Gruppengeschwindigkeit voneinander unterscheiden, desto besser wird dies bewertet. Die ist insbesondere vorteilhaft mit dem weiteren Kriterium, dass eine Bewertung umso besser ist, je näher die Phasengeschwindigkeit und/oder die Gruppengeschwindigkeit an der Schallgeschwindigkeit des Fluids ist. Durch dieses Kriterium wird erreicht, dass die geführte Welle möglichst planar über den Querschnitt des Messrohrs ist.

Je geringer die Frequenzabhängigkeiten der Phasengeschwindigkeit und der Gruppengeschwindigkeit sind, desto besser wird dies bewertet. So wird die Abhängigkeit von Frequenzänderungen bei der Anregung gering gehalten.

Je größer der kleinste Abstand bei der Phasengeschwindigkeit zwischen verschiedenen Moden ist, desto besser wird dies bewertet. So wird gewährleistet, dass die gewünschte und damit die vorbestimmte Schwingungsmode und andere, also ungewünschte Schwingungsmoden deutlich unterschiedliche Wellenmuster aufweisen und daher gut selektiv angeregt und selektiv empfangen werden können.

Je größer der kleinste Abstand bei der Gruppengeschwindigkeit zwischen verschiedenen Moden ist, desto besser wird dies bewertet. Hierdurch wird erreicht, dass die gewünschte Mode ein möglichst unterschiedliches Laufzeitverhalten hat im Vergleich zu anderen Schwingungsmoden, sodass die Unterscheidbarkeit der Moden möglichst groß ist.

Je achssymmetrischer die Mode ist, desto besser wird dies bewertet. Dadurch wird erreicht, dass die Durchflussmessung eine möglichst geringe Abhängigkeit von Strömungsinhomogenitäten hinsichtlich der Messrohrachse hat.

Je ähnlicher sich die relative Änderung der Phasengeschwindigkeit und/oder der Gruppengeschwindigkeit zu einer relativen Änderung der Schallgeschwindigkeit des Fluids verhält, desto besser wird dies bewertet. Dadurch wird erreicht, dass die Phasengeschwindigkeit und/oder die Gruppengeschwindigkeit möglichst ähnlich der Schallgeschwindigkeit in dem Fluid bleiben, selbst wenn sich diese ändert. Das ist vorteilhaft hinsichtlich der Einhaltung einer planaren Wellenform, die deshalb bevorzugt ist, weil mit ihr (bei der Laufzeitdifferenzmessung) intrinsisch über das Flussgeschwindigkeitsprofil gemittelt wird und damit eine Strömungsgeschwindigkeit des Fluids unabhängig vom Flussgeschwindigkeitsprofil bestimmt werden kann.

Je kleiner die Dämpfung der Amplitude der Mode bei Ausbreitung im Fluid ist, umso besser wird dies bewertet. So wird eine gute Signalstärke der vorbestimmten Wellenmode gewährleistet.

Je gleichbleibender die Amplitude der Mode über den inneren Querschnitt des Messrohrs ist, desto besser wird dies bewertet. Durch dieses Kriterium wird die Messung unabhängiger gegenüber Inhomogenitäten der Strömung des Fluids über den Querschnitt des Messrohrs.

Eine Weiterbildung des Verfahrens sieht vor, dass aufgrund der gefundenen vorbestimmten Wellenmode und der gefundenen bestimmten Frequenz eine Auslegung der Anregungsstrukturen gewählt wird, insbesondere der räumliche Abstand zwischen Anregungsstrukturen entlang der Messrohrachse und/oder der zeitliche Abstand der Anregung der Anregungsstrukturen geeignet gewählt wird.

Eine Weiterentwicklung des Verfahrens betrifft eine Überprüfung der gewählten Auslegung der Anregungsstrukturen (einschließlich der zeitlichen Ansteuerung der Strukturen) auf ihre Tauglichkeit. Überprüft wird, ob die erzielte Amplitude der bestimmten und damit gewünschten Mode hinreichend groß ist, nach Möglichkeit größer als die Amplitude einer unerwünschten Mode bei der bestimmten Frequenz. Die Weiterentwicklung des Verfahrens zeichnet sich also dadurch aus, dass für die geometrischen und physikalischen Randbedingungen des von dem Fluid durchströmten Messrohrs unter Berücksichtigung der Auslegung der Anregungsstrukturen die Amplitude der bei einer Anregungsfrequenz erzeugten Schallwelle für zumindest die vorbestimmte Wellenmode in einem Frequenzbereich in Abhängigkeit von der Phasengeschwindigkeit der erzeugten Schallwelle bestimmt wird. Die Auslegung der Anregungsstrukturen wird verworfen und abgeändert, wenn die Amplitude der bestimmten Wellenmode eine Mindestgröße nicht erreicht, insbesondere die Amplitude der bestimmten Wellenmode bei der bestimmten Frequenz kleiner ist als die Amplitude einer unerwünschten Wellenmode. Insbesondere wird der Vorgang so lange wiederholt, bis eine nicht mehr zu verwerfende Auslegung der Anregungsstrukturen gefunden worden ist.

Eine bevorzugte Ausgestaltung des Verfahrens sieht vor, dass die Auswertung der Kriterien dadurch erfolgt, dass die betrachteten und anhand der Kriterien untersuchten Wellenmoden in eine Bewertungsreihenfolge gebracht und benotet werden, und anhand des erreichten Summennotenstandes die beste Mode als vorbestimmte Mode bestimmt wird. Es hat sich als praktikabel herausgestellt, nicht für jedes Kriterium einen absoluten Bewertungsmaßstab einzuführen, sondern einen relativen Bewertungsmaßstab heranzuziehen. Wenn beispielsweise vier Wellenmoden untersucht werden, dann werden die Kriterien (zum Beispiel Nähe der Phasengeschwindigkeit zur Schallgeschwindigkeit im Fluid) bei einer betrachteten Frequenz berechnet und die das Kriterium am besten erfüllende Wellenmode erhält die Note 4, die zweitbeste Wellenmode die Note 3 usw.

Wenn bestimmte Kriterien von besonderer Bedeutung sind, hat es sich als vorteilhaft erwiesen, dass verschiedene Kriterien mit unterschiedlicher Gewichtung in die Bewertung eingehen. Bei dem zuvor erläuterten Bewertungsbeispiel könnten bei dem relativen Bewertungsmaßstab wichtige Kriterien zum Beispiel doppelt gewichtet werden.

Wenn mit dem aufgezeigten Verfahren zur Bestimmung einer vorteilhaften vorbestimmten Wellenmode eine solche vorteilhafte vorbestimmte Wellenmode aufgefunden worden ist bei einer bestimmten Frequenz, dann wird diese vorbestimmte Wellenmode bei der bestimmten Frequenz im Betrieb des Ultraschalldurchflussmessgeräts angeregt.

Im Einzelnen gibt es nun eine Vielzahl von Möglichkeiten, das erfindungsgemäße Ultraschalldurchflussmessgerät und das erfindungsgemäße Verfahren auszugestalten und weiterzubilden. Dazu wird verwiesen einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigt
- Fig. 1: schematisch einen aus dem Stand der Technik bekanntes Ultraschalldurchflussmessgerät, das mit geführten Ultraschallwellen arbeitet,
- Fig. 2: schematisch ein Ausführungsbeispiel eines Ultraschalldurchflussmessgeräts mit einem Ultraschallaktor, der mehrere Anregungsstrukturen aufweist,
- Fig. 3: schematisch einen Ultraschallaktor mit mehreren Anregungsstrukturen und einem akustischen Koppelstück so wie mit direktem Kontakt zum Fluid,
- Fig. 4: schematisch einen Ultraschallaktor mit äquidistant beanstandeten Anregungsstrukturen,
- Fig. 5: schematisch ringförmig ausgebildete Anregungselemente als Piezoelemente mit unterschiedlicher Kontaktierung,
- Fig. 6: schematisch einen mehrstückig ausgeführten Ultraschallaktor mit gegeneinander schwenkbar gelagerten Teilstücken,
- Fig. 7: schematisch ein Ultraschalldurchflussmessgerät mit einem Ultraschallaktor und einem Ultraschallsensor, die einen konischen Grundkörper mit mehreren Anregungsstrukturen aufweisen,
- Fig. 8: schematisch den Ultraschallaktor gemäß Fig. 7 in größerem Detail,
- Fig. 9: schematisch ein Verfahren zum Bestimmen einer geeigneten Wellenmode, die als vorbestimmte Wellenmode beim Betreiben eines der zuvor dargestellten Ultraschalldurchflussmessgeräte verwendet wird,
- Fig. 10: schematisch die Phasen- und Gruppengeschwindigkeiten verschiedener Wellenmoden für eine bestimmte Konfiguration eines Ultraschalldurchflussmessgeräts und
- Fig. 11: schematisch die Amplituden der angeregten Ultraschallwellen in Abhängigkeit von der Anregungsfrequenz und der geltenden Phasengeschwindigkeit, einmal in positiver Ausbreitungsrichtung und einmal in negativer Ausbreitungsrichtung.

In den Figuren werden verschiedene Aspekte von Ultraschalldurchflussmessgeräten 1 dargestellt, wobei die Ultraschalldurchflussmessgeräte 1 ein Messrohr 2, einen ersten Ultraschallwandler 3, einen zweiten Ultraschallwandler 4 und eine Steuer- und Auswerteeinheit 5 aufweisen. Der erste Ultraschallwandler 3 und der zweite Ultraschallwandler 4 sind axial versetzt am Messrohr 2 angeordnet und der erste Ultraschallwandler 3 ist zumindest als Ultraschallaktor 6 ausgebildet und der zweite Ultraschallwandler 4 ist zumindest als Ultraschallsensor 7 ausgebildet. Die Steuer- und Auswerteeinheit 5 steuert im Betriebszustand des Ultraschalldurchflussmessgeräts 1 den Ultraschallaktor 6 so an, dass in dem von einem Fluid 8 durchströmten Messrohr 2 eine geführte Ultraschallwelle 9 angeregt wird. Der Ultraschallsensor 7 empfängt die geführte Ultraschallwelle 9 und die Steuer- und Auswerteeinheit 5 ermittelt durch Auswertung der empfangenen geführten Ultraschallwelle 9 eine Strömungsgeschwindigkeit v des Fluids 8.

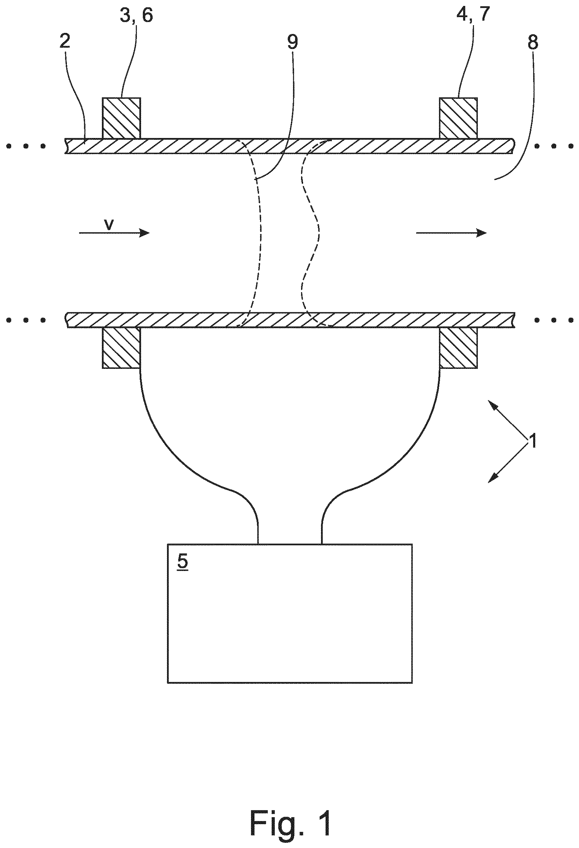

Fig. 1 zeigt ein aus dem Stand der Technik bekanntes Ultraschalldurchflussmessgerät 1, das mit geführten Ultraschallwellen 9 arbeitet. Das Messrohr 2 und das in dem Messrohr 2 geführte Fluid 8 bilden hier insgesamt einen Wellenleiter, auf dem sich die geführten Ultraschallwellen 9 ausbreiten. Die Ausbreitung von geführten Ultraschallwellen 9 auf einem Wellenleiter wird durch eine Wellengleichung beschrieben, bei deren Lösung die geometrischen Randbedingungen des Wellenleiters und natürlich sonstige physikalische Parameter der Anordnung, beispielsweise des Mediums, zu berücksichtigen sind. Bekanntlich sind nur bestimmte Wellenformen, die als Wellenmoden bezeichnet werden, auf dem Wellenleiter stabil ausbreitungsfähig. Bei den hier dargestellten Ausführungsbeispielen wird die Strömungsgeschwindigkeit v des Fluids 8 mit einem Laufzeitdifferenzverfahren bestimmt, es wird also die Signallaufzeit einer geführten Ultraschallwelle 9 mit der Strömungsrichtung und entgegen der Strömungsrichtung des Fluids 8 ermittelt. Dies hat den Vorteil, dass sich bei der Berechnung der Fluidgeschwindigkeit v die unabhängig von der Strömungsrichtung des Fluids 8 identische Komponente der Geschwindigkeit der Ultraschallwelle 9 im Fluid 8 automatisch aufhebt.

Bei dem aus dem Stand der Technik bekannten Ultraschalldurchflussmessgerät 1 gemäß Fig. 1 gibt es nur einen einzigen, punktuell wirkenden Ultraschallaktor 6 und nur einen einzigen, punktuell Signale aufnehmenden Ultraschallsensor 7. Prinzipbedingt kann der Ultraschallaktor 6 nur sehr unspezifisch Ultraschallwellen anregen und prinzipbedingt kann der Ultraschallsensor 7 nur sehr unspezifisch Ultraschallwellen erfassen.

Demgegenüber arbeiten die in den anderen Figuren dargestellten Ultraschalldurchflussmessgeräte 1 mit einer deutlichen Abwandlung. Die anderen dargestellten Ultraschalldurchflussmessgeräte 1 mit Ultraschallaktoren 6 bzw. Ultraschallsensoren 7 zeichnen sich dadurch aus, dass zumindest der als Ultraschallaktor 6 ausgestaltete Ultraschallwandler 3 in axialer Erstreckungsrichtung des Messrohrs 2 mehrere Anregungsstrukturen 10 aufweist, wobei die Anregungsstrukturen 10 in axialer Erstreckungsrichtung des Messrohres 2 voneinander beabstandet sind. Mittels der Anregungsstrukturen 10 werden Ultraschallwellen 9 in das von dem Fluid 8 durchströmte Messrohr 2 eingespeist, sodass räumlich verteilt in axialer Erstreckungsrichtung des Messrohres 2 ein Wellenmuster wenigstens einer vorbestimmten Wellenmode der geführten Ultraschallwelle 9 in dem von dem Fluid 8 durchströmten Messrohr 2 angeregt wird. Die Anregungsstrukturen 10 weisen Kontaktflächen 11 zum Messrohr 2 und/oder zum im Messrohr 2 geführten Fluid 8 auf, wobei über die Kontaktflächen 11 eine akustische Anregung von Messrohr 2 und/oder Fluid 8 erfolgt.

Durch die mehreren voneinander beabstandeten Anregungsstrukturen 10 an mehreren Orten in Erstreckungsrichtung des Messrohrs 2 gesehen, können, zeitgleich oder zeitlich versetzt, mehrere akustische Anregungen erfolgen. Diese Anregungen werden so gewählt, dass sie genau der charakteristischen raum-zeitlichen Signatur, also dem Wellenmuster der sich über das von dem Fluid 8 durchströmten Messrohr 2 geführt ausbreitenden Ultraschallwelle 9 der vorbestimmten Wellenmode entsprechen. Durch die mehreren voneinander beabstandeten Anregungsstrukturen 10 wird ein ausgedehnter, strukturierter Anregungsbelag in Erstreckungsrichtung des Messrohrs 2 realisiert, sodass eine spezifischere Anregung einer gewünschten (oder mehrerer gewünschter) und daher vorbestimmten Wellenmode möglich ist. Dies ist ein Vorteil gegenüber dem Ausführungsbeispiel gemäß Fig. 1 mit nur einem einzigen Anregungsort. Das Wellenmuster der gewünschten, vorbestimmten Wellenmode kann so räumlich-zeitlich in das durchströmte Messrohr 2 mittels eines Anregungsbelags über die räumlich verteilten Anregungsstrukturen 10 entlang des Messrohres 2 eingeprägt werden.

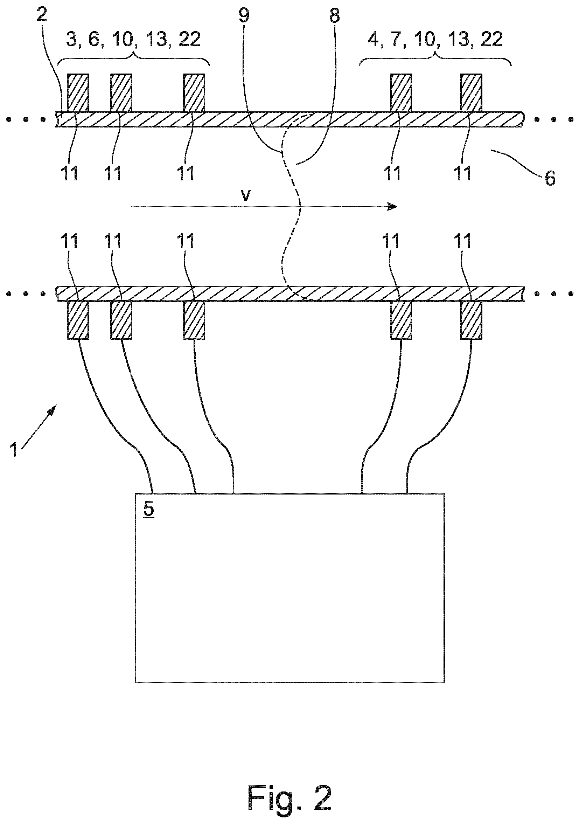

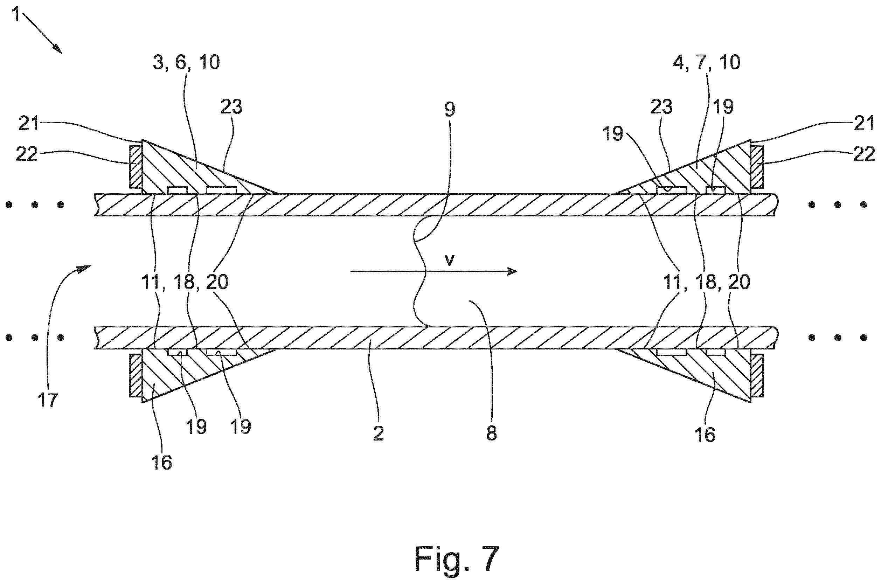

Den Ausführungsbeispielen gemäß den Fig. 2 und 7 ist gemein, dass der als Ultraschallsensor 7 ausgebildete zweite Ultraschallwandler 4 dem Grunde nach ausgebildet ist wie der als Ultraschallaktor 6 ausgebildete erste Ultraschallwandler 2, der Ultraschallsensor 7 weist also ebenfalls eine Mehrzahl an Anregungsstrukturen 10 auf, wobei die Anregungsstrukturen 10 als Erfassungsstrukturen wirken. Bei dem Ausführungsbeispiel gemäß Fig. 7 ist der zweite Ultraschallwandler 4 identisch ausgebildet wie der als Ultraschallaktor 6 ausgebildete erste Ultraschallwandler 3.

Bei allen in den Figuren dargestellten Ultraschalldurchflussmessgeräten 1 ist der erste Ultraschallwandler 3 auch als Ultraschallsensor 7 ausgebildet und ist der zweite Ultraschallwandler 4 auch als Ultraschallaktor 6 ausgebildet. Dies ist sinnvoll, weil - wie zuvor ausgeführt - die Steuer- und Auswerteeinheit 5 den ersten Ultraschallwandler 3 und den zweiten Ultraschallwandler 4 so betreibt, dass die Strömungsgeschwindigkeit v des Fluids 8 in dem Messrohr 2 über eine Laufzeitdifferenzmessung ermittelt wird.

Die in den Figuren gezeigten Ausführungsbeispiele von Ultraschalldurchflussmessgeräten 1 arbeiten mit Messrohren 2 mit einem Innendurchmesser von deutlich unter einem Zentimeter. Die Messrohre 2 sind schlauchartig flexibel ausgeführt, nämlich aus einem Perfluoralkoxy-Polymer, also aus einem elastischen Kunststoff. Bei anderen Ausgestaltungen, die hier nicht dargestellt sind, ist das Messrohr 2 mechanisch steif ausgeführt, insbesondere aus einem Metall, einem Kunststoff, einer Keramik oder Glas.

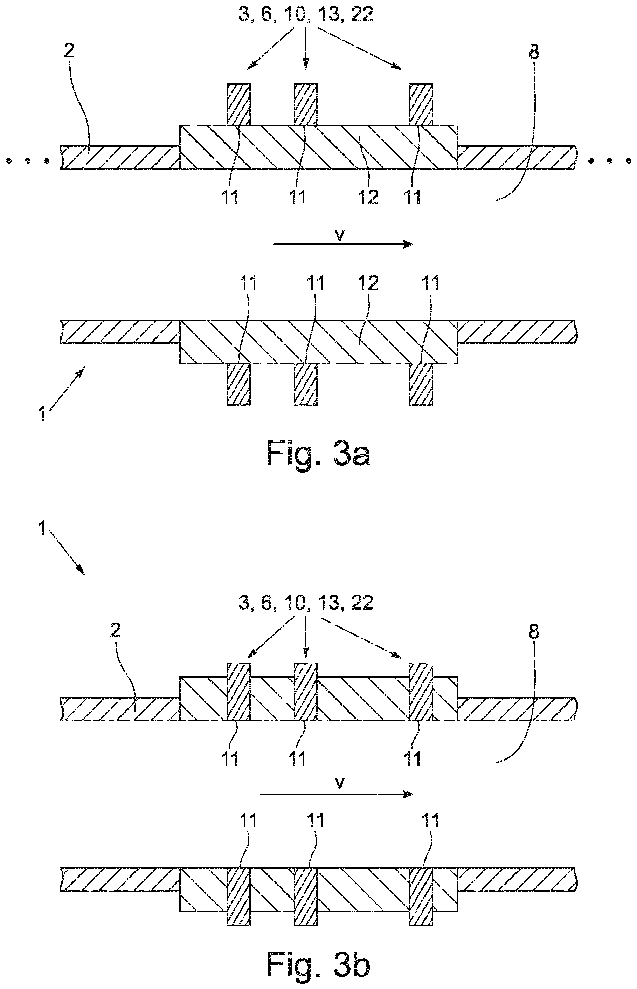

Bei dem Ultraschalldurchflussmessgerät 1 gemäß Fig. 3a ist das Messrohr 2 im Bereich der Anregungsstrukturen 10 als akustisches Koppelstück 12 ausgebildet zur Verbesserung der Schallübertragung von der Anregungsstruktur 10 zum Fluid 8 im Messrohr 2.

Bei dem Ultraschalldurchflussmessgerät 1 gemäß Fig. 3b ist das Messrohr 2 im Bereich der Anregungsstruktur 10 durch die Anregungsstruktur 10 selbst gebildet zur direkten Schallübertragung von der Anregungsstruktur 10 ins Fluid 8 im Messrohr 2. Die Kontaktflächen 11 haben also direkten Kontakt zum Fluid 8.

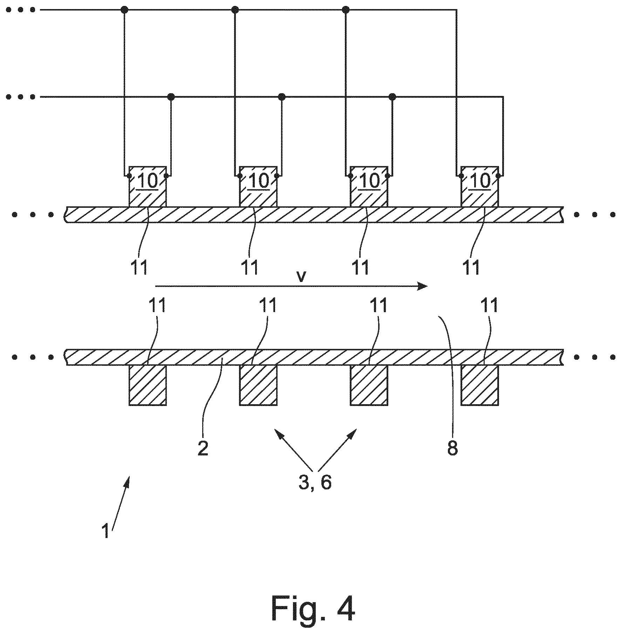

Bei den Ultraschalldurchflussmessgeräten 1 gemäß den Fig. 2 bis 4 werden die Anregungsstrukturen 10 durch wenigstens zwei in axialer Erstreckungsrichtung des Messrohrs 2 voneinander beabstandete und das Messrohr 2 in Umfangsrichtung umgreifende Ringe gebildet. Bei den Ausführungsbeispielen gemäß den Fig. 2 und 3 haben die Ringe des Ultraschallaktors 6 verschiedene Abstände voneinander und die Abstände der Ringe des Ultraschallsensors 7 unterscheiden sich von den Ringabständen des Ultraschallaktors 6 (Fig. 2). Bei dem Ausführungsbeispiel gemäß Fig. 4 wird anders verfahren, hier sind die Abstände zwischen den als Ringen ausgebildeten Anregungsstrukturen 10 äquidistant, was Vorteile bei der Herstellung mit sich bringt.

Bei den Ultraschalldurchflussmessgeräten 1 gemäß den Fig. 2 und 3 wird eine besonders große Flexibilität hinsichtlich sich ändernder Einsatz- und Randbedingungen dadurch erreicht, dass die Ringe separate Ultraschallerreger 22 sind, insbesondere separate Piezoelemente 13, wobei die Ultraschallerreger 22 von der Steuer- und Auswerteeinheit 5 separat ansteuerbar sind. Ferner sind die Ultraschallsensoren 7 auch mit Piezoelementen 13 ausgeführt und die Sensorsignale der einzelnen als Piezoelementringe ausgeführten Erfassungsstrukturen 10 sind separat auslesbar.

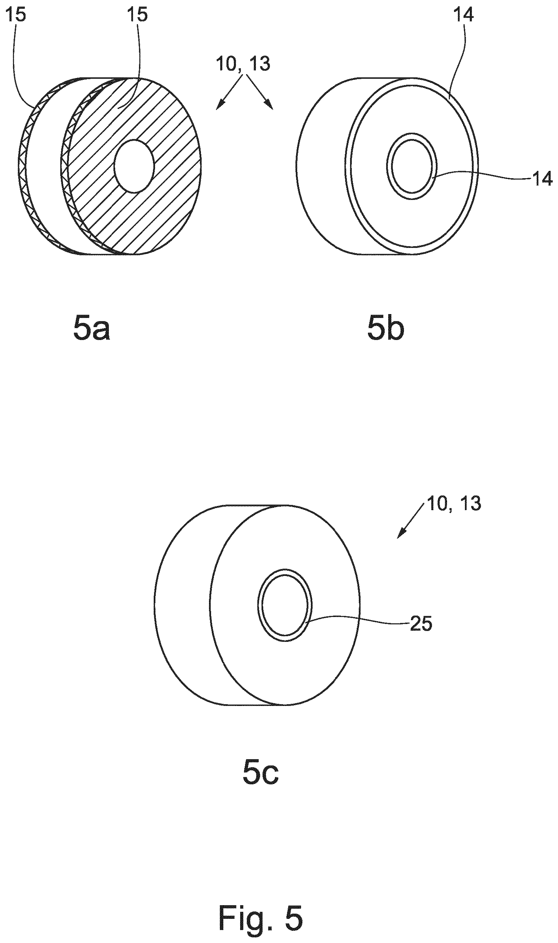

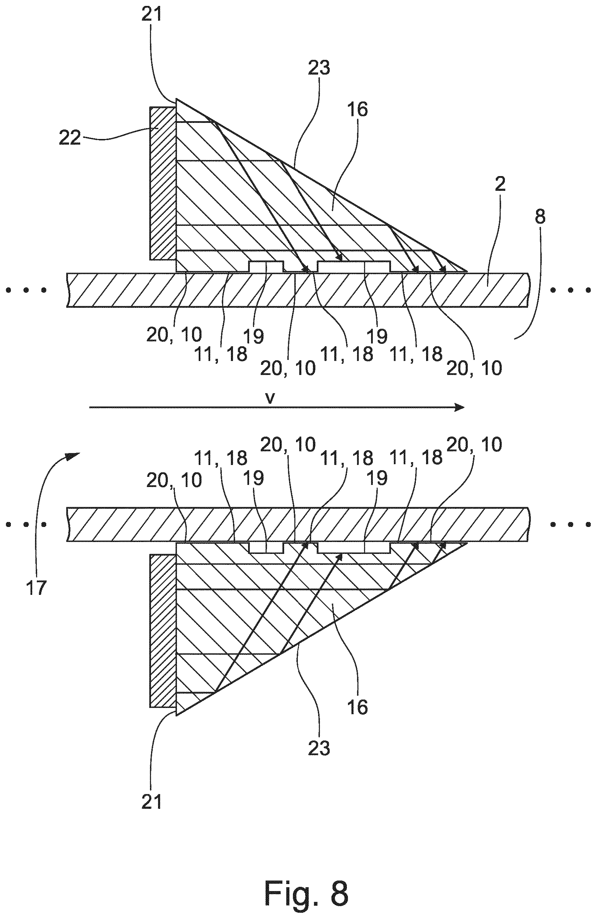

Fig. 5 zeigt einzelne Anregungs- bzw. Erfassungsstrukturen 10, die als ringförmige Piezoelemente 13 realisiert sind. Bei dem Piezoelement 13 gemäß Fig. 5a wird der Ring von der Steuer- und Auswerteeinheit 5 über zwei gegenüberliegende Grundflächen 15 kontaktiert (axialer Modus). Bei dem Piezoelement 13 gemäß Fig. 5b wird der Ring von der Steuer- und Auswerteeinheit 5 über eine innere und äußere Mantelfläche 14 des Rings kontaktiert (radialer Modus). Fig. 5c zeigt ein ringförmiges Piezoelement 13 mit einer Schicht 25, die entweder als Anpassungsschicht zur besseren Übertragung von Ultraschallwellen ausgestaltet ist (zum Beispiel für Anwendungen gemäß den Fig. 2 und 4) oder als Dämpfungsschicht zur Vermeidung der Übertragung von Ultraschallwellen (zum Beispiel für Anwendungen gemäß den Fig. 7 und 8, falls eine Halterung auch direkt am Messrohr 2 vorgesehen sein sollte, was nicht dargestellt ist).

Die separate Ansteuerbarkeit der mehreren voneinander beabstandeten Anregungsstrukturen 10 gemäß Fig. 2 durch die Steuer- und Auswerteeinheit 5 ermöglicht es, die mehreren voneinander beabstandeten Anregungsstrukturen 10 an mehreren Orten (in Erstreckungsrichtung des Messrohrs 2 gesehen) zeitlich versetzt anzuregen. Diese Anregungen erfolgen derart, dass sie genau das Wellenmuster der sich über das von dem Fluid 8 durchströmten Messrohr 2 geführt ausbreitenden Ultraschallwelle 9 der vorbestimmten Wellenmode verursachen. Vorteil einer zeitlich variablen und separaten Ansteuerbarkeit der Ringe ist die Anpassungsfähigkeit an sich ändernde Einsatzbedingungen, beispielsweise wenn sich das Fluid 8 ändert oder auch nur eine Temperaturänderung vorliegt.

Bei dem Ultraschalldurchflussmessgerät 1 gemäß Fig. 4 werden die mehreren als Ringe ausgestalteten Anregungsstrukturen 10 von der Steuer- und Auswerteeinheit 5 gleichzeitig angesteuert, was die Ausgestaltung der Steuer- und Auswerteeinheit 5 vereinfacht. In diesem Fall müssen die Abstände zwischen den separaten Ringen so gewählt werden, dass sie genau das Wellenmuster der sich über das von dem Fluid 8 durchströmten Messrohr 2 geführt ausbreitenden Ultraschallwelle 9 der vorbestimmten Wellenmode verursachen.

Bei dem Ultraschalldurchflussmessgerät 1 gemäß Fig. 2 werden die Ringe des Ultraschallaktors 6 in Richtung auf den Ultraschallsensor 7 zeitlich verzögert angesteuert, sodass die Ultraschallwelle 9 in der vorbestimmten Wellenmode in Richtung auf den Ultraschallsensor 7 verstärkt wird. In Richtung entgegen dem Ultraschallsensor 7 sind die erzeugten Wellenamplituden hingegen geringer, da sie sich in dieser Ausbreitungsrichtung aufgrund der zeitlichen Ansteuerung nicht überlagern. Hierdurch wird eine erhebliche Richtungsselektivität erreicht.

Bei dem als Ultraschallsensor 7 ausgestalteten Ultraschallwandler 4 gemäß Fig. 2 wird eine Selektivität der Erfassung des Wellenmusters der vorbestimmten Wellenmode erzielt, indem die von den mehreren Erfassungsstrukturen 10 gelieferten Empfangssignale zeitlich gefenstert oder zeitlich verzögert ausgewertet werden entsprechend der Ausbreitungscharakteristik und dem Wellenmuster der vorbestimmten Wellenmode. Die von den beiden Erfassungsstrukturen 10 des Ultraschallsensors 7 erfassten Signale könnten beispielsweise addiert werden, wobei das zuerst einlaufende Signal bei der linken der beiden Erfassungsstrukturen 10 um den zeitlichen Betrag verzögert wird, den ein Ultraschallsignal 9 der vorbestimmten Wellenmode benötigt, um von der linken der beiden Erfassungsstrukturen 10 zu der rechten der beiden Erfassungsstrukturen 10 zu gelangen. Nur bei einer entsprechenden Wellenmode könnten sich die Signale aufgrund der von der Wellenmode abhängigen Phasengeschwindigkeit addieren, wodurch ein Signaleingang in der erwarteten und vorbestimmten Wellenmode aufgrund additiver Signalstärken verifiziert werden kann.

Ähnlich kann eine zeitliche Fensterung realisiert werden, wobei ein Signaleingang bei der linken der beiden Erfassungsstrukturen 10 ein Erfassungsfenster bei der rechten der beiden Erfassungsstrukturen 10 auslöst. Läuft in diesem getriggerten Fenster kein Signal ein, hat es sich nicht um eine Ultraschallwelle 9 in der vorbestimmten Wellenmode gehandelt. Dies setzt voraus, dass die vorbestimmte Wellenmode und die Anregungsfrequenz der vorbestimmten Wellenmode geschickt gewählt werden, um eine gute Unterscheidbarkeit der vorbestimmten Wellenmode von anderen Wellenmoden zu erzielen.

Das in den Fig. 7 und 8 dargestellte Ultraschalldurchflussmessgerät 1 arbeitet nicht mit separaten Ringen, vielmehr ist ein konischer Grundkörper 16 mit einer zentrischen Ausnehmung 17 zur Aufnahme des Messrohrs 2 vorhanden, wobei eine durch die Ausnehmung 17 gebildete Innenwandung 18 des Grundkörpers 16 durch in Umfangsrichtung des Messrohrs 2 verlaufende Rücksprünge 19 in axialer Erstreckungsrichtung des Messrohrs 2 strukturiert ist. Die durch die Rücksprünge 19 gebildeten Vorsprünge 20 in der Innenwandung 18 des Grundkörpers 16 bilden die Anregungsstrukturen 10. An der Grundfläche 21 des konischen Grundkörpers 16 ist ein Ultraschallerreger 22 angeordnet, der Ultraschallwellen (durch Pfeillinien angedeutet) in den konischen Grundkörper 16 einspeist, wobei die Ultraschallwellen zumindest teilweise an der Mantelfläche 23 des konischen Grundkörpers 16 reflektiert werden und über die Vorsprünge 20 der Innenwandung 18 des Grundkörpers 16 die geführte Ultraschallwelle 9 im vom Fluid 8 durchströmten Messrohr 2 anregen.

Diese Umsetzung des Ultraschallaktors 6 ist etwas eingeschränkter als die Ausführung mit separaten Ringen, da die Vorsprünge 20 im konischen Grundkörper 16 konstruktiv fest implementiert sind. Auch werden Ultraschallwellen nur von einem Ultraschallerreger 22 erzeugt, der die Ultraschallwellen in den konischen Grundkörper 16 einspeist, wobei die Ultraschallwellen sich dort durch Reflexion an der Mantelfläche 23 in dem Grundkörper 16 verteilen und letztlich über die Vorsprünge 20 in der Wandung des Grundkörpers 16 in den Wellenleiter (Messrohr/Fluid) eingespeist werden.

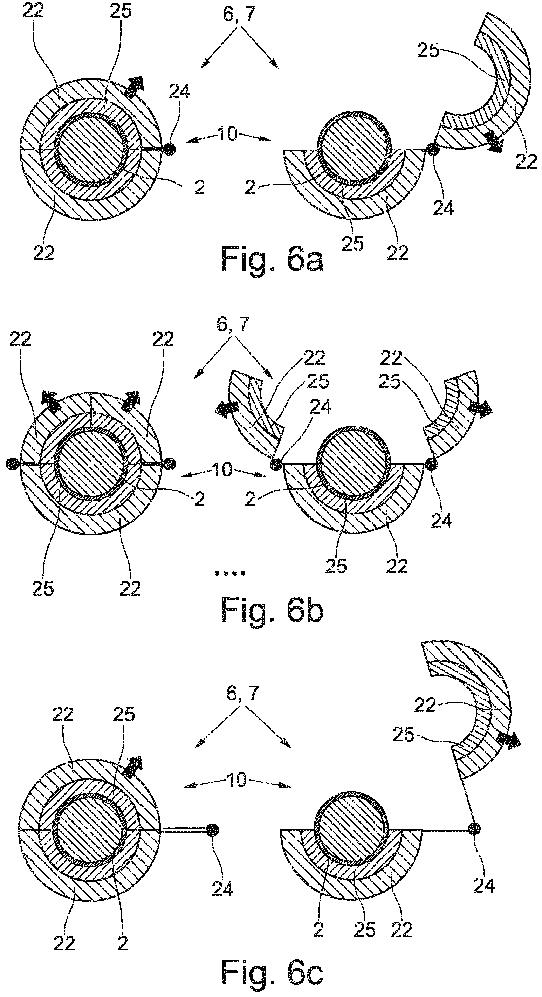

Fig. 6 zeigt Ultraschalldurchflussmessgeräte 1, bei denen der Ultraschallaktor 6 und/oder der Ultraschallsensor 7 mehrstückig ausgeführt ist, sodass er auf das Messrohr 2 radial aufsteckbar ist, insbesondere wobei die mehreren Stücke über ein oder mehrere Scharniere 24 gegeneinander schwenkbar gelagert sind. Eine Anpassungsschicht 25 sorgt für einen optimalen Übergang der Ultraschallwellen von dem Ultraschallerreger 22 zu dem Messrohr 2 und zu dem Fluid 8 in dem Messrohr 2.

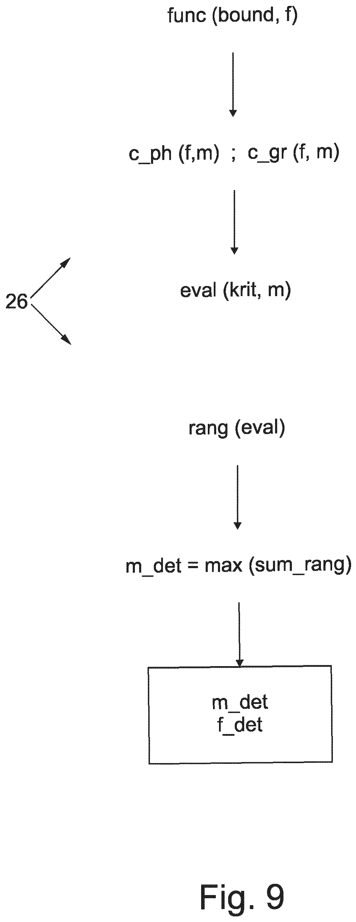

Die Fig. 9 bis 11 zeigen ein Verfahren 26 zum Bestimmen wenigstens einer Wellenmode, die bei der Durchflussmessung in einem Ultraschalldurchflussmessgerät 1 erzeugt wird. Das Ultraschalldurchflussmessgerät 1 ist von der zuvor beschriebenen Art, das heißt, es weist ein Messrohr 2, einen ersten Ultraschallwandler 3, einen zweiten Ultraschallwandler 4 und eine Steuer- und Auswerteeinheit 5 auf. Der erste Ultraschallwandler 3 und der zweite Ultraschallwandler 4 sind axial versetzt am Messrohr 2 angeordnet, wobei der erste Ultraschallwandler 3 zumindest als Ultraschallaktor 6 ausgebildet ist, wobei der zweite Ultraschallwandler 4 zumindest als Ultraschallsensor 7 ausgebildet ist, und wobei die Steuer- und Auswerteeinheit 5 im Betriebszustand des Ultraschalldurchflussmessgeräts 1 den Ultraschallaktor 6 so ansteuert, dass in dem von einem Fluid 8 durchströmten Messrohr 2 eine geführte Ultraschallwelle 9 angeregt wird.

Der Ultraschallsensor 7 empfängt die geführte Ultraschallwelle 9 und die Steuer- und Auswerteeinheit 5 ermittelt durch Auswertung der empfangenen geführten Ultraschallwelle 9 eine Strömungsgeschwindigkeit des Fluids 8. Der als Ultraschallaktor 6 ausgestaltete Ultraschallwandler 3 weist in axialer Erstreckungsrichtung des Messrohrs 2 mehrere Anregungsstrukturen 10 auf, wobei die Anregungsstrukturen 10 in axialer Erstreckungsrichtung des Messrohres 2 voneinander beabstandet sind. Mittels der Anregungsstrukturen 10 werden Ultraschallwellen in das von dem Fluid 8 durchströmte Messrohr 2 eingespeist, sodass räumlich verteilt in axialer Erstreckungsrichtung des Messrohres 2 das Wellenmuster einer vorbestimmten Wellenmode m_det der geführten Ultraschallwelle 9 in dem von dem Fluid durchströmten Messrohr 2 angeregt wird.

Das Verfahren 26 sieht gemäß Fig. 9 vor, dass für die geometrischen und physikalischen Randbedingungen bound des von dem Fluid 8 durchströmten Messrohrs 2 für eine Mehrzahl von Wellenmoden m die Phasengeschwindigkeiten c_ph und die Gruppengeschwindigkeiten c_gr von Schallwellen in einem Frequenzbereich bestimmt func(bound, f) werden. Es wird diejenige Wellenmode als vorbestimmte Wellenmode m_det ausgewählt, die bei einer bestimmten Frequenz f_det innerhalb des Frequenzbereichs bei Auswertung eval wenigstens eines der folgenden Kriterien krit die höchste Bewertung eval_max erhält:
a) je weniger sich die Phasengeschwindigkeit c_ph und die Gruppengeschwindigkeit c_gr voneinander unterscheiden, desto besser,
b) je näher die Phasengeschwindigkeit c_ph und/oder die Gruppengeschwindigkeit c_gr an der Schallgeschwindigkeit im Fluid ist, desto besser,
c) je geringer die Frequenzabhängigkeiten der Phasengeschwindigkeit c_ph und der Gruppengeschwindigkeit c_gr sind, desto besser,
d) je größer der kleinste Abstand bei der Phasengeschwindigkeit c_ph zwischen verschiedenen Moden m ist, desto besser,
e) je größer der kleinste Abstand bei der Gruppengeschwindigkeit c_gr zwischen verschiedenen Moden m ist, desto besser,
f) je achssymmetrischer die Mode m ist, desto besser,
g) je ähnlicher sich die relative Änderung der Phasengeschwindigkeit c_ph und/oder der Gruppengeschwindigkeit c_gr zur einer relativen Änderung der Schallgeschwindigkeit des Fluids 8 verhält, desto besser,
h) je kleiner die Dämpfung der Amplitude der Mode bei Ausbreitung im Fluid ist, desto besser,
i) je gleichbleibender die Amplitude der Mode m über den inneren Querschnitt des Messrohrs 2 ist, desto besser.

Ergebnis des Verfahrens ist also nicht nur die Bestimmung einer gewünschten und damit vorbestimmten Wellenmode m_det, sondern auch die bestimmte Frequenz f_det, bei der die vorbestimmte Wellenmode m_det anzuregen ist.

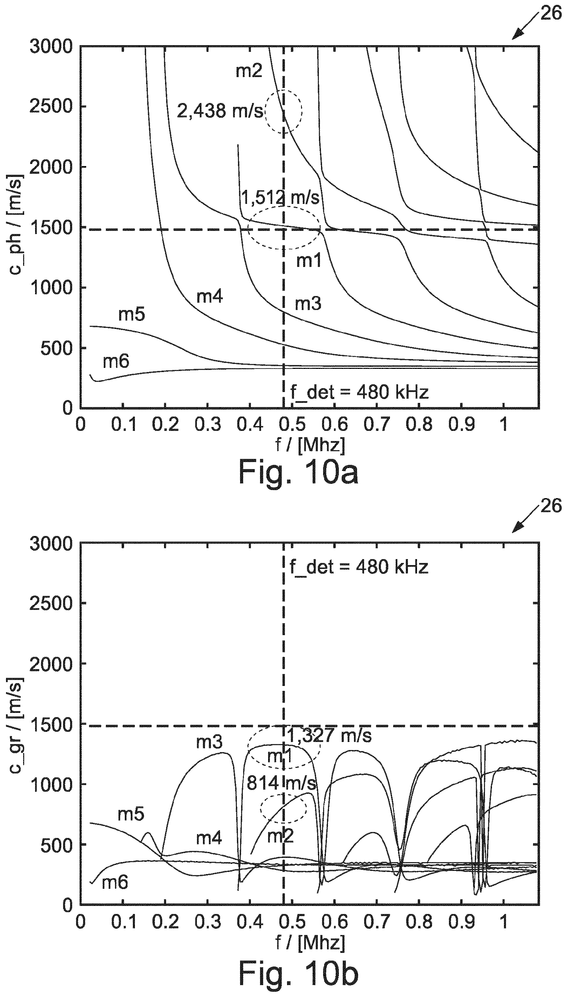

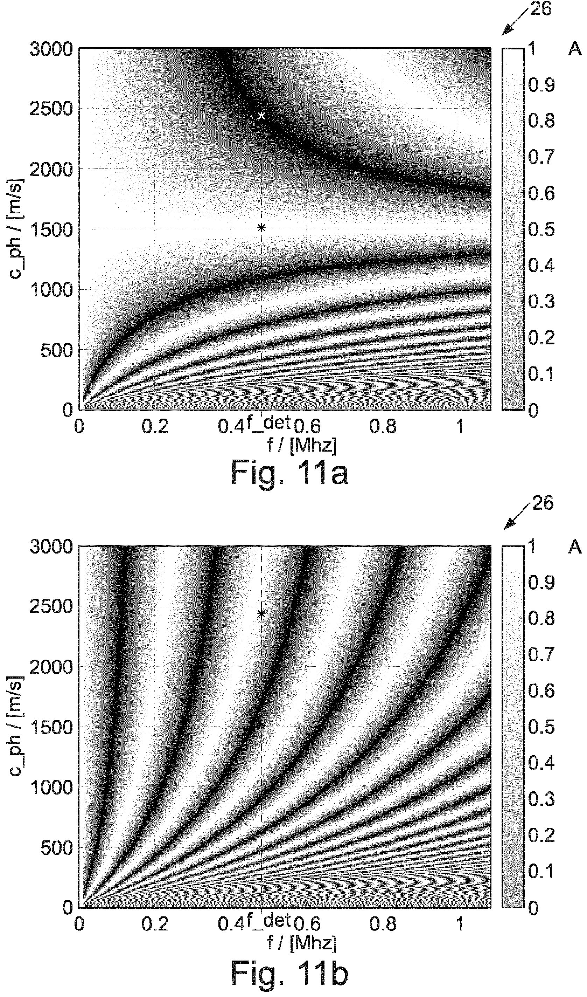

Die Bedeutung der Kriterien ist im allgemeinen Beschreibungsteil erläutert worden. Einige der Kriterien werden anhand der Fig. 10 und 11 im Detail veranschaulicht.

Fig. 10a zeigt die berechnete Phasengeschwindigkeit c_ph und Fig. 10b die berechnete Gruppengeschwindigkeit c_gr von Ultraschallwellen in einem Frequenzbereich von 0 bis etwa einem MHz. Als Randbedingungen sind gewählt worden ein gerades Messrohr 2 aus einem elastischen Perfluoralkoxy-Polymer-Röhrchen mit einem Außendurchmesser von 6,35 mm und einem Innendurchmesser von 4,35 mm. Ferner wurden angenommen für Wasser eine Schallgeschwindigkeit von 1480 m/s und eine Fluid-Dichte von 1000 kg/m^3. Für den Außenraum des Messrohrs 2 ist Luft bei Normaldruck und Normaltemperatur angenommen worden. Diese Berechnung hängt nicht ab von der konkreten Ausgestaltung der Anregungsstrukturen 10, d. h. räumliche Abstände zwischen den Anregungsstrukturen 10 und etwaige zeitliche Abstände hinsichtlich der Ansteuerung der Anregungsstrukturen 10, es geht nur um die Frage ausbreitungsfähiger Wellenmoden unter den gewählten geometrischen und physikalischen Randbedingungen von Messrohr und Fluid bei bestimmten Frequenzen der erregten Wellen.

Wie Fig. 10 zu entnehmen ist, bewegen sich sowohl die Phasengeschwindigkeit c_ph wie die Gruppengeschwindigkeit c_gr der Wellenmode m1 nahe an der Schallgeschwindigkeit des Fluids von 1480 m/s bei einer Frequenz von 480 kHz, was zu einer guten Bewertung bei den Kriterien a) und b) führt (planare Welle). Ferner hat die Mode m1 bei dieser Frequenz eine geringe Dispersion bei der Phasengeschwindigkeit c_ph und der Gruppengeschwindigkeit c_gr, was eine geringe Abhängigkeit der Phasengeschwindigkeit c_ph und der Gruppengeschwindigkeit c_gr von der Frequenz der übertragenen Wellen bedeutet und zu einer guten Bewertung hinsichtlich des Kriteriums c) führt.

Bei der Frequenz von 480 kHz gibt es ferner einen großen Abstand zwischen der Phasengeschwindigkeit c_ph wie auch der Gruppengeschwindigkeit c_gr zwischen der Wellenmode m1 und den benachbarten Moden m2 und m3, was zu einer guten Bewertung hinsichtlich der Kriterien d) und g) führt.

Was hier nicht dargestellt, aber berechnet worden ist, ist, dass die relative Änderung der Phasengeschwindigkeit c_ph und/oder der Gruppengeschwindigkeit c_gr sich sehr ähnlich zu einer relativen Änderung der Schallgeschwindigkeit des Fluids 8 verhält (Änderung des Mediums), was zu einer guten Bewertung bei Kriterium g) führt.

Insgesamt ergibt sich aus der Betrachtung ein bevorzugtes Ergebnis für die Wellenmode m1, die daher als vorbestimmte Wellenmode m_det gewählt wird, bei der bestimmten Frequenz f_det von 480 kHz, wobei die Wellenmode m2 aufgrund der nächstliegenden Geschwindigkeit einen Störfaktor darstellt. Mit dem Wissen, dass die Schwingungsmode m1 bei einer bestimmten Frequenz von f_det von 480 kHz angeregt werden soll, können nun die Anregungsstrukturen 10 - je nach bestehenden Freiheitsgraden - in ihrer räumlichen Anordnung entlang der Messrohrachse und/oder in ihrer zeitlichen Anregung ausgelegt werden. Im vorliegenden Fall sind zwei Anregungsstrukturen 10 mit einem Abstand von 4,15 mm und mit einer Anregungsverzögerung von 2,74 µs gewählt worden.

Hilfreich ist hier die Beantwortung der Frage, wie sich die Amplituden der verschiedenen Moden m1 und m2 bei gleicher Anregung zueinander verhalten, was Fig. 10 nicht entnommen werden kann, insbesondere ist gewünscht, dass die Amplitude der vorbestimmten Mode hinreichend hoch ist, beispielsweise um ein gutes Signal/Rauschverhältnis zu erreichen. Hierzu wird als Amplitude A der Betrag der zweidimensionalen Fouriertransformierten der Wellenfunktion berechnet, in die auch die Eigenschaften der Anregungsstrukturen eingehen, hier also zwei Anregungsstrukturen mit dem genannten Abstand und der genannten Anregungsverzögerung.

Die Amplituden A in Form des Betrags der zweidimensionalen Fouriertransformierten der erzeugten Ultraschallwellen unter Berücksichtigung der Auslegung der Anregungsstrukturen 10 sind - die immer gleiche Anregung vorausgesetzt - in Fig. 11 in Grautönen codiert und auf das Intervall 0 bis 1 normiert worden.

Fig. 11a zeigt die Amplitude A der resultierenden Ultraschallwelle für die Bewegungsrichtung der Welle von dem Ultraschallaktor 6 zu dem Ultraschallsensor 7. Fig. 11b hingegen zeigt die Lösung der Wellengleichung für die Amplitude A der resultierenden Ultraschallwelle für die Bewegungsrichtung der Welle von dem Ultraschallaktor 6 weg von dem Ultraschallsensor 7, also in entgegengesetzter Richtung, weg von der eigentlichen Messstrecke.

Sowohl in Fig. 11a wie auch in Fig. 11b sind die Wellenmoden m1 und m2 aus der korrespondierenden Darstellungen der Fig. 10a übertragen worden.

Anhand von Fig. 11a ist klar zu erkennen, dass die Wellenmode m1 in Richtung auf den Ultraschallsensor 7 eine erheblich höhere Amplitude hat als die nächstschnellere Wellenmode m2, was die zeitliche Unterscheidbarkeit der zwei Wellenmoden stark erhöht. Ferner ist die Amplitude der Wellenmode m1 abgewandt von der Richtung auf den Ultraschallsensor 7 deutlich unterdrückt hinsichtlich der Wellenmode m2 (Fig. 11b), was eine gute Unterstützung der Wellenmode m1 für die Messaufgabe belegt.

Vor diesem Hintergrund sieht das Verfahren 26 vor, dass für die geometrischen und physikalischen Randbedingungen des von dem Fluid 8 durchströmten Messrohrs 2 unter Berücksichtigung der Auslegung der Anregungsstrukturen 10 die Amplitude A der bei einer Anregungsfrequenz erzeugten Schallwelle für zumindest die vorbestimmte Wellenmode m_det in einem Frequenzbereich in Abhängigkeit von der Phasengeschwindigkeit c_ph der erzeugten Schallwelle bestimmt wird und die Auslegung der Anregungsstrukturen 10 verworfen und abgeändert wird, wenn die Amplitude A der bestimmten Wellenmode m_det eine Mindestgröße nicht erreicht. Ein Kriterium für eine solche Mindestgröße ist hier, dass die Amplitude A der bestimmten Wellenmode m_det (Wellenmode m1) nicht kleiner sein darf als die Amplitude A der unerwünschten Wellenmode m2. Dies ist hier nicht der Fall, sodass die Auslegung der Anregungsstrukturen 10 beibehalten wird. Wäre das Ergebnis nicht zufriedenstellend, würde der beschriebene Prüfvorgang so lange wiederholt, bis eine nicht mehr zu verwerfende Auslegung der Anregungsstrukturen 10 gefunden wird.

Eine besonders einfache Methode, das Verfahren 26 durchzuführen, besteht darin, dass die Auswertung eval der Kriterien krit dadurch erfolgt, dass die betrachteten und anhand der Kriterien krit untersuchten Moden m in eine Bewertungsreihenfolge rang gebracht und benotet werden, und anhand des erreichten Summennotenstandes sum_rang die beste Mode als bestimmte Mode m_det bestimmt wird.

Wenn auf Kriterien krit unterschiedlicher Wert gelegt wird, gehen diese verschiedene Kriterien krit mit unterschiedlicher Gewichtung in die Bewertung ein, was sehr einfach durchführbar ist.

Nach Durchführung des Verfahrens 26 wird das zugehörige Ultraschalldurchflussmessgerät 1 jedenfalls so betrieben, dass die bestimmte Frequenz f_det innerhalb des Frequenzbereichs verwendet wird, um die vorbestimmte Wellenmode m_det anzuregen. Dazu ist nicht nur die Anregungsfrequenz zu berücksichtigen, sondern auch die Phasengeschwindigkeit der vorbestimmten Wellenmode, im vorliegenden Fall also der Wellenmode m1 bei der bestimmten Frequenz f_det von 480 kHz.

### Bezugszeichen

- 1: Ultraschalldurchflussmessgerät
- 2: Messrohr
- 3: erster Ultraschallwandler
- 4: zweiter Ultraschallwandler
- 5: Steuer- und Auswerteeinheit
- 6: Ultraschallaktor
- 7: Ultraschallsensor
- 8: Fluid
- 9: geführte Ultraschallwelle
- 10: Anregungsstrukturen, Erfassungsstrukturen
- 11: Kontaktflächen
- 12: akustisches Koppelstück
- 13: Piezoelement
- 14: Mantelfläche von Ringen
- 15: Grundfläche von Ringen
- 16: konischer Grundkörper
- 17: zentrische Ausnehmung
- 18: Innenwandung des Grundkörpers
- 19: Rücksprung der Innenwandung
- 20: Vorsprünge
- 21: Grundfläche des konischen Grundkörpers
- 22: Ultraschallerreger
- 23: Mantelfläche des konischen Grundkörpers
- 24: Scharniere
- 25: Schicht, Anpassungsschicht oder Dämpfungsschicht
- 26: Verfahren

- m_det: vorbestimmte Wellenmode
- m: Wellenmode
- c_ph: Phasengeschwindigkeit
- c_gr: Gruppengeschwindigkeit
- bound: geometrische und physikalische Randbedingungen des von dem Fluid durchströmten Messrohrs
- f_det: bestimmte Frequenz
- krit: Kriterien
- eval: Auswertung von Kriterien
- eval_max: höchste Bewertung
- A: Amplitude als Betrag der zweidimensionalen Fouriertransformierten der Wellenfunktion unter Berücksichtigung der Eigenschaften der Anregungsstrukturen
- rang: Bewertungsreihenfolge
- sum_rang: Summennotenstand

## Patentansprüche

1. Ultraschalldurchflussmessgerät (1) mit einem Messrohr (2), mit einem ersten Ultraschallwandler (3), mit einem zweiten Ultraschallwandler (4) und mit einer Steuer- und Auswerteeinheit (5), wobei der erste Ultraschallwandler (3) und der zweite Ultraschallwandler (4) axial versetzt am Messrohr (2) angeordnet sind, wobei der erste Ultraschallwandler (3) zumindest als Ultraschallaktor (6) ausgebildet ist, wobei der zweite Ultraschallwandler (4) zumindest als Ultraschallsensor (7) ausgebildet ist, wobei die Steuer- und Auswerteeinheit (5) im Betriebszustand des Ultraschalldurchflussmessgeräts (1) den Ultraschallaktor (6) so ansteuert, dass in dem von einem Fluid (8) durchströmten Messrohr (2) eine geführte Ultraschallwelle (9) angeregt wird und sich die geführte Ultraschallwelle (9) in einem kombinierten Wellenleiter umfassend Messrohr (2) und Fluid (8) in axialer Erstreckungsrichtung des Messrohrs (2) in Messrohr (2) und Fluid (8) geführt ausbreitet, wobei der Ultraschallsensor (7) die geführte Ultraschallwelle (9) empfängt und die Steuer- und Auswerteeinheit (5) durch Auswertung der empfangenen geführten Ultraschallwelle (9) eine Strömungsgeschwindigkeit (v) des Fluids (8) ermittelt,
**dadurch gekennzeichnet,**
**dass** zumindest der als Ultraschallaktor (6) ausgestaltete Ultraschallwandler (3) in axialer Erstreckungsrichtung des Messrohrs (2) mehrere Anregungsstrukturen (10) aufweist, wobei die Anregungsstrukturen (10) in axialer Erstreckungsrichtung des Messrohres (2) voneinander beabstandet sind, wobei mittels der Anregungsstrukturen (10) Ultraschallwellen in das von dem Fluid durchströmte Messrohr (2) eingespeist werden, sodass räumlich verteilt in axialer Erstreckungsrichtung des Messrohres (2) ein Wellenmuster wenigstens einer vorbestimmten Wellenmode (m_det) der geführten Ultraschallwelle (9) in dem von dem Fluid (8) durchströmten Messrohr (2) angeregt wird.

2. Ultraschalldurchflussmessgerät (1) nach Anspruch 1, **dadurch gekennzeichnet, dass** der als Ultraschallsensor (7) ausgebildete zweite Ultraschallwandler (4) dem Grunde nach ausgebildet ist wie der als Ultraschallaktor (6) ausgebildete erste Ultraschallwandler (2), sodass die Anregungsstrukturen (10) als Erfassungsstrukturen wirken, insbesondere der zweite Ultraschallwandler (4) identisch ausgebildet ist wie der als Ultraschallaktor (6) ausgebildete erste Ultraschallwandler (3).

3. Ultraschalldurchflussmessgerät (1) nach Anspruch 1 oder 2, **dadurch gekennzeichnet, dass** der erste Ultraschallwandler (3) auch als Ultraschallsensor (7) ausgebildet ist und dass der zweite Ultraschallwandler (4) auch als Ultraschallaktor (6) ausgebildet ist, insbesondere wobei die Steuer- und Auswerteeinheit (5) den ersten Ultraschallwandler (3) und den zweiten Ultraschallwandler (4) so betreibt, dass die Strömungsgeschwindigkeit (v) des Fluids (8) in dem Messrohr (2) über eine Laufzeitdifferenzmessung ermittelt wird.

4. Ultraschalldurchflussmessgerät (1) nach einem der Ansprüche 1 bis 3, **dadurch gekennzeichnet, dass** das Messrohr (2) mechanisch steif ausgeführt ist, insbesondere aus einem Metall, einem Kunststoff, einer Keramik oder Glas, oder dass das Messrohr schlauchartig flexibel ausgeführt ist, insbesondere aus einem elastischen Kunststoff, insbesondere aus einem Perfluoralkoxy-Polymer.

5. Ultraschalldurchflussmessgerät (1) nach einem der Ansprüche 1 bis 4, **dadurch gekennzeichnet, dass** das Messrohr (2) im Bereich der Anregungsstrukturen (10) als akustisches Koppelstück (12) ausgebildet ist zur Verbesserung der Schallübertragung von der Anregungsstruktur (12) zum Fluid (8) im Messrohr (2).

6. Ultraschalldurchflussmessgerät (1) nach einem der Ansprüche 1 bis 4, **dadurch gekennzeichnet, dass** das Messrohr (2) im Bereich der Anregungsstruktur (10) durch die Anregungsstruktur (10) selbst gebildet ist zur direkten Schallübertragung von der Anregungsstruktur (10) ins Fluid (8) im Messrohr (2).

7. Ultraschalldurchflussmessgerät (1) nach einem der Ansprüche 1 bis 6, **dadurch gekennzeichnet, dass** die Anregungsstrukturen (10) durch wenigstens zwei in axialer Erstreckungsrichtung des Messrohrs (2) voneinander beabstandete und das Messrohr (2) in Umfangsrichtung umgreifende Ringe gebildet werden, insbesondere wobei bei mindestens drei Ringen, die Ringe äquidistant voneinander beabstandet sind.

8. Ultraschalldurchflussmessgerät (1) nach Anspruch (7), **dadurch gekennzeichnet, dass** die Ringe separate Ultraschallerreger sind, insbesondere separate Piezoelemente (13), insbesondere wobei die Ultraschallerreger von der Steuer- und Auswerteeinheit (5) separat ansteuerbar sind.

9. Ultraschalldurchflussmessgerät (1) nach Anspruch 7 oder 8, **dadurch gekennzeichnet, dass** die Ringe von der Steuer- und Auswerteeinheit (5) jeweils über eine innere und äußere Mantelfläche (14) der Ringe kontaktiert werden oder dass die Ringe von der Steuer- und Auswerteeinheit (5) jeweils über zwei gegenüberliegende Grundflächen (15) angesteuert werden.

10. Ultraschalldurchflussmessgerät (1) nach einem der Ansprüche 7 bis 9, **dadurch gekennzeichnet, dass** die Ringe in einer gemeinsamen Ringhalterung gelagert sind, insbesondere über ihre äußeren Mantelflächen (15) mit der gemeinsamen Ringhalterung verbunden sind, wobei die gemeinsame Ringhalterung zumindest teilweise Material aufweist, das das Übersprechen von Ultraschallwellen zwischen den mehreren Ringen dämpft.

11. Ultraschalldurchflussmessgerät (1) nach einem der Ansprüche 7 bis 10, **dadurch gekennzeichnet, dass** die Ringe des Ultraschallaktors (6) in Richtung auf den Ultraschallsensor (7) zeitlich verzögert angesteuert werden, sodass die Ultraschallwelle (9) in der vorbestimmten Wellenmode in Richtung auf den Ultraschallsensor (7) verstärkt wird.

12. Ultraschalldurchflussmessgerät (1) nach einem der Ansprüche 7 bis 11, insoweit rückbezogen auf Anspruch 2, **dadurch gekennzeichnet, dass** eine Selektivität der Erfassung des Wellenmusters der vorbestimmten Wellenmode erzielt wird, indem die von den mehreren Erfassungsstrukturen (10) gelieferten Empfangssignale zeitlich gefenstert oder zeitlich verzögert ausgewertet werden entsprechend der Ausbreitungscharakteristik und dem Wellenmuster der vorbestimmten Wellenmode.

13. Ultraschalldurchflussmessgerät (1) nach einem der Ansprüche 1 bis 6, **dadurch gekennzeichnet, dass** der Ultraschallaktor (6) einen konischen Grundkörper (16) mit einer zentrischen Ausnehmung (17) zur Aufnahme des Messrohrs (2) umfasst, wobei eine durch die Ausnehmung (17) gebildete Innenwandung (18) des Grundkörpers (16) durch wenigstens einen in Umfangsrichtung des Messrohrs (2) verlaufenden Rücksprung (19) in axialer Erstreckungsrichtung des Messrohrs (2) strukturiert ist und die durch den wenigsten einen Rücksprung (19) gebildeten wenigstens zwei Vorsprünge (20) in der Innenwandung des Grundkörpers (16) die Anregungsstrukturen (10) bilden, dass an der Grundfläche (21) des konischen Grundkörpers (16) ein Ultraschallerreger (22) angeordnet ist, der Ultraschallwellen in den konischen Grundkörper (16) einspeist, wobei die Ultraschallwellen zumindest teilweise an der Mantelfläche (23) des konischen Grundkörpers (16) reflektiert werden und über die Vorsprünge (20) der Innenwandung (18) des Grundkörpers (16) die geführte Ultraschallwelle (9) im vom Fluid (8) durchströmten Messrohr (2) anregen.

14. Ultraschalldurchflussmessgerät (1) nach Anspruch 13, **dadurch gekennzeichnet, dass** der Ultraschallerreger (22) als Ring ausgestaltet ist, insbesondere als ringförmiges Piezoelement (13), wobei vorzugsweise das ringförmige Piezoelement (13) von der Steuer- und Auswerteeinheit (5) über eine innere und äußere Mantelfläche (14) des Rings kontaktiert wird oder dass das ringförmige Piezoelement (13) von der Steuer- und Auswerteeinheit (5) über zwei gegenüberliegende Grundflächen (15) angesteuert wird.

15. Ultraschalldurchflussmessgerät (1) nach einem der Ansprüche 1 bis 14, **dadurch gekennzeichnet, dass** der Ultraschallaktor (6) mehrstückig ausgeführt ist, sodass er auf das Messrohr (2) radial aufsteckbar ist, insbesondere wobei die mehreren Stücke über ein oder mehrere Scharniere (24) gegeneinander schwenkbar gelagert sind.

16. Ultraschalldurchflussmessgerät (1) nach einem der Ansprüche 1 bis 15, **dadurch gekennzeichnet, dass** die vorbestimmte Wellenmode gemäß dem Verfahren (26) nach einem der Ansprüche 17 bis 21 bestimmt worden ist.

17. Verfahren (26) zum Bestimmen wenigstens einer Wellenmode, die bei der Durchflussmessung in einem Ultraschalldurchflussmessgerät (1) erzeugt wird, wobei das Ultraschalldurchflussmessgerät (1) ein Messrohr (2), einen ersten Ultraschallwandler (3), einen zweiten Ultraschallwandler (4) und eine Steuer- und Auswerteeinheit (5) umfasst, wobei der erste Ultraschallwandler (3) und der zweite Ultraschallwandler (4) axial versetzt am Messrohr (2) angeordnet sind, wobei der erste Ultraschallwandler (3) zumindest als Ultraschallaktor (6) ausgebildet ist, wobei der zweite Ultraschallwandler (4) zumindest als Ultraschallsensor (7) ausgebildet ist, wobei die Steuer- und Auswerteeinheit (5) im Betriebszustand des Ultraschalldurchflussmessgeräts (1) den Ultraschallaktor (6) so ansteuert, dass in dem von einem Fluid (8) durchströmten Messrohr (2) eine geführte Ultraschallwelle (9) angeregt wird und sich die geführte Ultraschallwelle (9) in einem kombinierten Wellenleiter umfassend Messrohr (2) und Fluid (8) in axialer Erstreckungsrichtung des Messrohrs (2) in Messrohr (2) und Fluid (8) geführt ausbreitet, wobei der Ultraschallsensor (7) die geführte Ultraschallwelle (9) empfängt und die Steuer- und Auswerteeinheit (5) durch Auswertung der empfangenen geführten Ultraschallwelle (9) eine Strömungsgeschwindigkeit des Fluids (8) ermittelt, wobei zumindest der als Ultraschallaktor (6) ausgestaltete Ultraschallwandler (3), (4) in axialer Erstreckungsrichtung des Messrohrs (2) mehrere Anregungsstrukturen (10) aufweist, wobei die Anregungsstrukturen (10) in axialer Erstreckungsrichtung des Messrohres (2) voneinander beabstandet sind, wobei mittels der Anregungsstrukturen (10) Ultraschallwellen in das von dem Fluid (8) durchströmte Messrohr (2) eingespeist werden, sodass räumlich verteilt in axialer Erstreckungsrichtung des Messrohres (2) das Wellenmuster einer vorbestimmten Wellenmode (m_det) der geführten Ultraschallwelle (9) in dem von dem Fluid durchströmten Messrohr (2) angeregt wird,
dass für die geometrischen und physikalischen Randbedingungen des von dem Fluid (8) durchströmten Messrohrs (2) für eine Mehrzahl von Wellenmoden (m) die Phasengeschwindigkeiten (c_ph) und die Gruppengeschwindigkeiten (c_gr) von Schallwellen in einem Frequenzbereich bestimmt werden, dass diejenige Wellenmode als vorbestimmte Wellenmode (m_det) ausgewählt wird, die bei einer bestimmten Frequenz (f_det) innerhalb des Frequenzbereichs bei Auswertung (eval) wenigstens eines der folgenden Kriterien (krit) die höchste Bewertung (eval_max) erhält:
a) je weniger sich die Phasengeschwindigkeit (c_ph) und die Gruppengeschwindigkeit (c_gr) voneinander unterscheiden, desto besser,
b) je näher die Phasengeschwindigkeit (c_ph) und/oder die Gruppengeschwindigkeit (c_gr) an der Schallgeschwindigkeit im Fluid ist, umso besser,
c) je geringer die Frequenzabhängigkeiten der Phasengeschwindigkeit (c_ph) und der Gruppengeschwindigkeit (c_gr) sind, desto besser,
d) je größer der kleinste Abstand bei der Phasengeschwindigkeit (c_ph) zwischen verschiedenen Moden (m) ist, desto besser,
e) je größer der kleinste Abstand bei der Gruppengeschwindigkeit (c_gr) zwischen verschiedenen Moden (m) ist, desto besser,
f) je achssymmetrischer die Mode (m) ist, desto besser,
g) je ähnlicher sich die relative Änderung der Phasengeschwindigkeit (c_ph) und/oder der Gruppengeschwindigkeit (c_gr) zur einer relativen Änderung der Schallgeschwindigkeit des Fluids (8) verhält, umso besser,
h) je kleiner die Dämpfung der Amplitude der Mode bei Ausbreitung im Fluid ist, umso besser,
i) je gleichbleibender die Amplitude der Mode (m) über den inneren Querschnitt des Messrohrs (2) ist, desto besser.

18. Verfahren (26) nach Anspruch 17, **dadurch gekennzeichnet, dass** das aufgrund der gefundenen vorbestimmten Wellenmode (m_det) und der bestimmten Frequenz (f_det) eine Auslegung der Anregungsstrukturen (10) gewählt wird, insbesondere der räumliche Abstand zwischen Anregungsstrukturen (10) entlang der Messrohrachse und/oder der zeitliche Abstand der Anregung der Anregungsstrukturen (10).

19. Verfahren (26) nach Anspruch 18, **dadurch gekennzeichnet, dass** für die geometrischen und physikalischen Randbedingungen des von dem Fluid (8) durchströmten Messrohrs (2) unter Berücksichtigung der Auslegung der Anregungsstrukturen (10) die Amplitude (A) der bei einer Anregungsfrequenz erzeugten Schallwelle für zumindest die vorbestimmte Wellenmode (m_det) in einem Frequenzbereich in Abhängigkeit von der Phasengeschwindigkeit (c_ph) der erzeugten Schallwelle bestimmt wird und die Auslegung der Anregungsstrukturen (10) verworfen und abgeändert wird, wenn die Amplitude (A) der bestimmten Wellenmode (m_det) eine Mindestgröße nicht erreicht, insbesondere die Amplitude (A) der bestimmten Wellenmode (m_det) kleiner ist als die Amplitude (A) einer unerwünschten Wellenmode,, insbesondere wobei der Vorgang solange wiederholt wird, bis eine nicht mehr zu verwerfende Auslegung der Anregungsstrukturen gefunden worden ist.

20. Verfahren (26) nach einem der Ansprüche 17 bis 19, **dadurch gekennzeichnet, dass** die Auswertung (eval) der Kriterien (krit) dadurch erfolgt, dass die betrachteten und anhand der Kriterien (krit) untersuchten Moden (m) in eine Bewertungsreihenfolge (rang) gebracht und benotet werden, und anhand des erreichten Summennotenstandes (sum_rang) die beste Mode als bestimmte Mode (m_det) bestimmt wird.

21. Verfahren (26) nach Anspruch 20, **dadurch gekennzeichnet, dass** verschiedene Kriterien (krit) mit unterschiedlicher Gewichtung in die Bewertung eingehen.

22. Verfahren (26) nach einem der Ansprüche 17 bis 21, **dadurch gekennzeichnet, dass** die bestimmte Frequenz (f_det) innerhalb des Frequenzbereichs die Frequenz ist, mit der die bestimmte Mode (m_det) angeregt wird.
